# EUROPEAN PATENT APPLICATION

(11) **EP 4 462 940 A1**
(43) Date of publication of application: **13.11.2024**
(21) Application number: 22923607.0
(22) Date of filing: 23.12.2022
(51) Int. Cl.: H04W 76/11

(54) **COMMUNICATION METHOD AND APPARATUS**

(30) Priority: 30.01.2022 CN 202210114737
(71) Applicant: Huawei Technologies Co., Ltd., Shenzhen, Guangdong 518129 (CN)
(72) Inventor: ZHOU, Xiaoyun, Shenzhen, Guangdong 518129 (CN); ZONG, Zaifeng, Shenzhen, Guangdong 518129 (CN); LIAO, Ting, Shenzhen, Guangdong 518129 (CN); ZHENG, Xiaochun, Shenzhen, Guangdong 518129 (CN)
(74) Representative: Pfenning, Meinig & Partner mbB
(86) International application number: PCT/CN2022/141589
(87) International publication number: WO 2023/142821

(57) **Abstract**

This application provides a communication method and apparatus, to enable an access network device to manage a terminal device. The method includes: obtaining identification information of a first terminal in a target terminal based on first information from a first network element, where the target terminal includes one or more terminals; sending the identification information of the first terminal to the first network element; receiving an indication of a first operation from the first network element; performing the first operation on the first terminal according to the indication of the first operation; and sending a first execution result to the first network element, where the first execution result is a result of the first operation performed by the first terminal. According to the method provided in embodiments of this application, a communication distance between the access network device and the terminal is not limited, so that the access network device may manage terminals in a scenario in which the terminals are deployed on a large scale.

## Description

### CROSS-REFERENCE TO RELATED APPLICATION

This application claims priority to Chinese Patent Application No. 202210114737.0, filed with the China National Intellectual Property Administration on January 30, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A working principle of a passive radio frequency identification (radio frequency identification, RFID) technology is as follows: A tag converts a radio signal sent by a reader/writer into energy, and uses the energy to drive the tag to work.

During communication development, to reduce power consumption of a terminal device, the RFID technology is introduced into a communication network to implement a passive internet of things. To be specific, a capability of a card reader may be integrated into a base station, the base station may send a radio signal to a tag such as a passive or semi-passive terminal device, and the terminal device may use a conversion capability of the signal to drive the terminal device to work, for example, send a data packet to the base station. The passive or semi-passive terminal device needs to rely on external excitation to send information, and the excitation usually comes from the reader/writer. In addition, a communication distance between the reader/writer and the passive or semi-passive terminal device needs to meet a specific condition. That is, the distance cannot be too long. In this case, how to manage passive or semi-passive terminal devices in a scenario in which the passive or semi-passive terminal devices are deployed on a large scale becomes an urgent problem to be resolved.

### SUMMARY

This application provides a communication method and apparatus, to enable an access network device to manage a terminal device.

According to a first aspect, an embodiment of this application provides a communication method. The method may be performed by an access network device or a module (for example, a chip) in an access network device. For example, the access network device performs the method. The method includes: obtaining identification information of a first terminal in a target terminal based on first information from a first network element, where the target terminal includes one or more terminals; sending the identification information of the first terminal to the first network element; receiving an indication of a first operation from the first network element; performing the first operation on the first terminal according to the indication of the first operation; and sending a first execution result to the first network element, where the first execution result is a result of the first operation performed by the first terminal.

In embodiments of this application, the access network device may manage the target terminal according to an indication of the first network element, and the first network element may be connected to a plurality of access network devices, to manage more terminals. According to the method provided in embodiments of this application, a communication distance between the access network device and the terminal is not limited, so that the access network device may manage terminals in a scenario in which the terminals are deployed on a large scale.

In a possible design, the first information indicates that an operation of a second terminal in the target terminal is completed, or the first information indicates to obtain identification information of another terminal in the target terminal, or the first information indicates to perform one random access procedure, or the first information indicates to obtain identification information of the target terminal. According to the foregoing design, an explicit or implicit indication may be implemented to obtain identification information of a next target terminal.

In a possible design, after the first execution result is sent to the first network element, it may be determined that an operation of obtaining the identification information of the target terminal is completed; and second information is sent to the first network element, where the second information indicates to complete an operation on the target terminal. According to the foregoing design, a core network device may be notified in a timely manner that the operation on the target terminal is completed, which helps the core network device manage the target terminal.

In a possible design, the first information carries a time interval. After the second information is sent to the first network element, the identification information of the target terminal may be obtained again after the time interval elapses. According to the foregoing design, the access network device may periodically manage the target terminal.

In a possible design, the first information further includes a first address. The first address is an address used by the first network element to receive the identification information of the target terminal and/or an execution result of the first operation performed by the target terminal. The foregoing design helps the access network device report the identification information of the target terminal and/or the execution result of the first operation performed by the target terminal to the core network device.

In a possible design, the sending the identification information of the first terminal to the first network element includes: sending the identification information of the first terminal to the first network element based on the first address.

In a possible design, the sending an execution result of the first operation to the first network element includes: sending the first execution result to the first network element based on the first address.

In a possible design, an operation parameter corresponding to the first operation from the first network element is obtained. According to the foregoing design, accuracy of performing the first operation on the target terminal may be improved.

In a possible design, the first operation includes at least one of the following: a read operation, a write operation, a delete operation, an encryption operation, an access operation, a block write operation, a block erase operation, or a kill operation.

In a possible design, the indicating the first terminal to perform the first operation includes: sending the indication of the first operation to the first terminal; and receiving the first execution result sent by the first terminal.

In a possible design, the obtaining identification information of a first terminal in a target terminal includes: sending third information to the target terminal, where the third information is used for obtaining the identification information of the target terminal; and receiving the identification information of the first terminal.

In a possible design, the sending third information to the first terminal includes: if the first information does not carry a start time, sending the third information to the first terminal; or if the first information carries a start time and a current time is not earlier than the start time and/or the first information carries an end time and the current time is not later than the end time, sending the third information to the first terminal.

According to the foregoing design, it may be ensured that the target terminal is managed within a required management time, thereby avoiding a waste of a management resource.

In a possible design, the first information carries target terminal information, and the target terminal information is used for determining the target terminal. The foregoing design helps the access network device determine the target terminal.

In a possible design, the target terminal information includes at least one of the following: indication information of the target terminal, an identifier value range of the target terminal, an identifier list of the target terminal, a group identifier of a target terminal group, identification information of a user to which the target terminal belongs, or identification information of an application to which the target terminal belongs.

In a possible design, the first information carries target area information, and the target area information is used for determining an area of the target terminal. The foregoing design helps the access network device determine the target terminal.

In a possible design, the first network element is a terminal management function network element, or the first network element is a mobility management network element, or the first network element is a network exposure network element, or the first network element is an application function network element, or the first network element is a terminal management function network element control plane network element.

According to a second aspect, an embodiment of this application provides a communication method. The method may be performed by a first network element or a module (for example, a chip) in a first network element. For example, the first network element performs the method. The method includes: determining to perform a first operation on a target terminal, where the target terminal includes one or more terminals; sending first information to an access network device, where the first information is used for obtaining identification information of the target terminal; and receiving identification information of a first terminal from the access network device.

In embodiments of this application, the access network device may manage the target terminal according to an indication of the first network element, and the first network element may be connected to a plurality of access network devices, to manage more terminals. According to the method provided in embodiments of this application, a communication distance between the access network device and the terminal is not limited, so that the access network device may manage terminals in a scenario in which the terminals are deployed on a large scale.

In a possible design, the determining to perform a first operation on a target terminal includes: receiving fourth information from an application function network element, where the fourth information is used for requesting to perform the first operation on the target terminal.

In a possible design, after the identification information of the first terminal is received from the access network device, third information may be sent to the access network device. The third information indicates to obtain identification information of another terminal in the target terminal, or the third information indicates that an operation of the first terminal is completed, or the third information indicates to perform one random access procedure. According to the foregoing design, the target terminal may implement a query (or inventory).

In a possible design, after the identification information of the first terminal is received from the access network device, an indication of the first operation may be sent to the access network device, where the indication of the first operation indicates to perform the first operation on the first terminal; and an execution result of the first operation from the access network device is received. According to the foregoing design, an operation such as a read operation, a write operation, or the like on the target terminal may be implemented.

In a possible design, after the execution result of the first operation is received from the access network device, third information may be sent to the access network device, where the third information indicates to obtain identification information of another terminal in the target terminal, or the third information indicates that an operation of the first terminal is completed, or the third information indicates to perform one random access procedure; and identification information of a second terminal from the access network device is received. According to the foregoing design, a next terminal may continue to be managed.

In a possible design, the sending first information to an access network device includes: if the fourth information does not carry a start time, sending the first information to the access network device; or if the fourth information carries a start time and a current time is not earlier than the start time and/or the fourth information carries an end time and the current time is not later than the end time, sending the first information to the access network device.

According to the foregoing design, it may be ensured that the target terminal is managed within a required management time, thereby avoiding a waste of a management resource.

In a possible design, the first operation includes at least one of the following: a read operation, a write operation, a delete operation, an encryption operation, an access operation, a block write operation, a block erase operation, or a kill operation.

In a possible design, the fourth information carries target terminal information, and the first information is used for determining the target terminal. The foregoing design helps the access network device determine the target terminal.

In a possible design, the target terminal information includes at least one of the following: indication information of the target terminal, an identifier value range of the target terminal, an identifier list of the target terminal, a group identifier of a target terminal group, identification information of a user to which the target terminal belongs, or identification information of an application to which the target terminal belongs.

In a possible design, the fourth information carries target area information, and the target area information is used for determining an area of the target terminal. The foregoing design helps the access network device determine the target terminal.

In a possible design, the first network element is a terminal management function network element, or the first network element is a mobility management network element, or the first network element is a network exposure network element, or the first network element is a terminal management function network element control plane network element.

In a possible design, the method further includes: receiving second information from one or more access network devices, where the second information indicates to complete an operation on the target terminal; and sending fifth information to the application function network element, where the fifth information indicates to complete the operation on the target terminal. According to the foregoing design, a core network device may be notified in a timely manner that the operation on the target terminal is completed, which helps the core network device manage the target terminal.

According to a third aspect, an embodiment of this application provides a communication method. The method may be performed by an application function network element or a module (for example, a chip) in an application function network element. For example, the application function network element performs the method. The method includes: sending fourth information to a first network element, where the fourth information is used for requesting to perform a first operation on a target electronic tag, and the target electronic includes one or more electronic tags; and receiving a result that is sent by the first network element and that is of the first operation performed by the target electronic tag.

In embodiments of this application, an access network device may manage a target terminal according to an indication of the first network element, and the first network element may be connected to a plurality of access network devices, to manage more terminals. According to the method provided in embodiments of this application, a communication distance between the access network device and the terminal is not limited, so that the access network device may manage terminals in a scenario in which the terminals are deployed on a large scale.

In a possible design, the first operation includes at least one of the following: a read operation, a write operation, a delete operation, an encryption operation, an access operation, a block write operation, a block erase operation, or a kill operation.

According to a fourth aspect, an embodiment of this application provides a communication apparatus. The apparatus includes modules/units for performing the method according to any one of the first aspect and the possible implementations of the first aspect. The modules/units may be implemented by hardware, or may be implemented by hardware by executing corresponding software.

For example, the communication apparatus may include a transceiver module and a processing module. The transceiver module may be configured to perform information receiving and sending processing in each design solution of the first aspect, for example, receive first information. The processing module is configured to obtain identification information of a first terminal in a target terminal based on first information from a first network element, and the like.

According to a fifth aspect, an embodiment of this application provides a communication apparatus. The apparatus includes modules/units for performing the method according to any one of the second aspect and the possible implementations of the second aspect. The modules/units may be implemented by hardware, or may be implemented by hardware by executing corresponding software.

For example, the communication apparatus may include a transceiver module and a processing module. The processing module is configured to determine to perform a first operation on a target terminal, and the like. The transceiver module may be configured to perform information receiving and sending processing in each design solution in the second aspect, for example, send first information to an access network device.

According to a sixth aspect, an embodiment of this application provides a communication apparatus. The apparatus includes modules/units for performing the method according to any one of the third aspect and the possible implementations of the third aspect. The modules/units may be implemented by hardware, or may be implemented by hardware by executing corresponding software.

For example, the communication apparatus may include a transceiver module and a processing module. The transceiver module may be configured to perform information receiving and sending processing in each design solution of the third aspect, for example, send fourth information to a first network element. The processing module is configured to control the transceiver module to perform information receiving and sending processing.

According to a seventh aspect, an embodiment of this application provides a communication apparatus, including a processor, and a memory and a communication interface that are separately coupled to the processor. The communication interface is configured to communicate with another device. The processor is configured to run instructions or a program in the memory, and perform the method according to any one of the first aspect, the second aspect, and the third aspect, and the possible implementations of the first aspect, the second aspect, and the third aspect through the communication interface.

According to an eighth aspect, an embodiment of this application provides a computer-readable storage medium. The computer-readable storage medium stores computer-readable instructions. When the computer-readable instructions are run on a computer, the method according to any one of the first aspect, the second aspect, and the third aspect, and the possible implementations of the first aspect, the second aspect, and the third aspect is performed.

According to a ninth aspect, an embodiment of this application provides a computer program product including instructions. When the computer program product is run on a computer, the method according to any one of the first aspect, the second aspect, and the third aspect, and the possible implementations of the first aspect, the second aspect, and the third aspect is performed.

According to a tenth aspect, an embodiment of this application provides a communication system. The system includes one or more of the access network device configured to perform any method in the first aspect, the first network element configured to perform any method in the second aspect, and an application function device configured to perform any method in the third aspect.

For technical effects that may be brought by any possible design of the fourth aspect to the tenth aspect, refer to descriptions of technical effects that may be brought by any possible design of the first aspect to the third aspect. Details are not described herein again.

### BRIEF DESCRIPTION OF DRAWINGS

FIG. 1 is a schematic diagram of an architecture of a communication system according to an embodiment of this application;
FIG. 2 is a schematic diagram of an architecture of a communication system according to an embodiment of this application;
FIG. 3 is a schematic diagram of an architecture of a communication system according to an embodiment of this application;
FIG. 4 is a schematic diagram of an architecture of a communication system according to an embodiment of this application;
FIG. 5 is a schematic diagram of an architecture of a communication system according to an embodiment of this application;
FIG. 6 is a schematic diagram of an architecture of a communication system according to an embodiment of this application;
FIG. 7 is a schematic flowchart of a communication method according to an embodiment of this application;
FIG. 8 is a schematic diagram of a terminal management process according to an embodiment of this application;
FIG. 9A and FIG. 9B are a schematic diagram of a terminal management process according to an embodiment of this application;
FIG. 10A and FIG. 10B are a schematic diagram of a terminal management process according to an embodiment of this application;
FIG. 11A and FIG. 11B are a schematic diagram of a terminal management process according to an embodiment of this application;
FIG. 12 is a schematic flowchart of a communication method according to an embodiment of this application;
FIG. 13 is a schematic diagram of a terminal management process according to an embodiment of this application;
FIG. 14 is a schematic diagram of a terminal management process according to an embodiment of this application;
FIG. 15 is a schematic flowchart of a communication method according to an embodiment of this application;
FIG. 16 is a schematic diagram of a terminal management process according to an embodiment of this application;
FIG. 17 is a schematic diagram of a terminal management process according to an embodiment of this application;
FIG. 18 is a schematic diagram of a structure of a communication apparatus according to an embodiment of this application; and
FIG. 19 is a schematic diagram of a structure of a communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

In the following, some terms in embodiments of this application are explained and described to facilitate understanding by a person skilled in the art.
(1) Counting operation: The counting operation may also be referred to as an inventory operation. The operation may obtain identification information of an electronic tag, for example, obtain the identification information of the electronic tag by using a command such as a query (query) command or an acknowledgment (ack) command.
(2) Read (Read) operation: The read operation may read electronic product code (electronic product code, EPC), a tag identifier (tag identifier, TID), content stored in a reserved area, content stored in a user memory bank, or the like in a memory bank of the electronic tag.
(3) Write (Write) operation: The write operation may write the EPC, the TID, the reserved area, or the user memory bank in the memory bank of the electronic tag.
(4) Kill (Kill) operation: The kill operation may make the electronic tag never work.
(5) Lock (Lock) operation: The lock operation may lock information of the electronic tag, and may prevent a read operation or a write operation on the electronic tag. Alternatively, the lock operation may lock a memory bank (memory bank), and may prevent or allow a read operation or a write operation to be performed on the memory bank.
(6) Block write operation: A reader/writer may perform a multi-word write operation on the reserved area, the EPC, the TID, or the user area of the tag memory bank by using a single command.
(7) Block erase operation: The reader/writer may perform a multi-word erase operation on the reserved area, the EPC, the TID, or the user area of the tag memory bank.
(8) Access operation: A tag with a non-zero-value access password (access password) may change from an open (open) state to a secured (secured) state.

In embodiments of this application, "at least one" means one or more, and "a plurality of" means two or more. "And/Or" is an association relationship for describing associated objects, and represents that three relationships may exist. For example, A and/or B may represent the following cases: Only A exists, both A and B exist, and only B exists, where A and B may be in a singular form or a plural form. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate: a, b, c, a-b, a-c, b-c, or a-b-c, where a, b, and c may exist alone or in parallel.

In addition, unless otherwise stated, in embodiments of this application, ordinal numbers such as "first" and "second" are intended to distinguish between a plurality of objects, but are not intended to limit sizes, content, orders, time sequences, priorities, importance, or the like of the plurality of objects. For example, a first message and a second message are merely intended to distinguish between different messages, but do not indicate that the two messages are different in content, a priority, importance, or the like.

The foregoing describes concepts of some terms involved in embodiments of this application. The following describes technical features involved in embodiments of this application.

A passive terminal device has a prospect of large-scale deployment and application. It is predicted that a quantity of devices reaches hundreds of billions in the future. A passive or semi-passive terminal device needs to rely on external excitation to send information, and the excitation usually comes from a reader/writer. In addition, a communication distance between the reader/writer and the passive or semi-passive terminal device needs to meet a specific condition. That is, the distance cannot be too long. In this case, how to manage passive or semi-passive terminal devices in a scenario in which the passive or semi-passive terminal devices are deployed on a large scale becomes an urgent problem to be resolved.

Based on this, embodiments of this application provide a communication method and apparatus, to enable an access network device to manage a terminal device. The method and the apparatus are conceived based on a same concept. The method and the apparatus have a similar problem-resolving principle. Therefore, for implementation of the apparatus and the method, refer to each other. Repeated parts are not described again.

The communication method provided in this application may be applied to various communication systems, for example, may be an internet of things (internet of things, IoT), a narrow band internet of things (narrow band internet of things, NB-IoT), or a long term evolution (long term evolution, LTE), or may be a 5th generation (5th generation, 5G) communication system, or may be a hybrid architecture of LTE and 5G, or may be 6G or a new communication system emerging in future communication development, or the like. The communication system may alternatively be a machine-to-machine (machine-to-machine, M2M) network, machine-type communication (machine-type communication, MTC), or another network. The communication system may alternatively be a passive internet of things communication system.

For example, the communication method provided in embodiments of this application may be applied to a communication system including a reader/writer and a tag.

The following describes an example in which the technical solutions in embodiments of this application are applied to a 5G communication system.

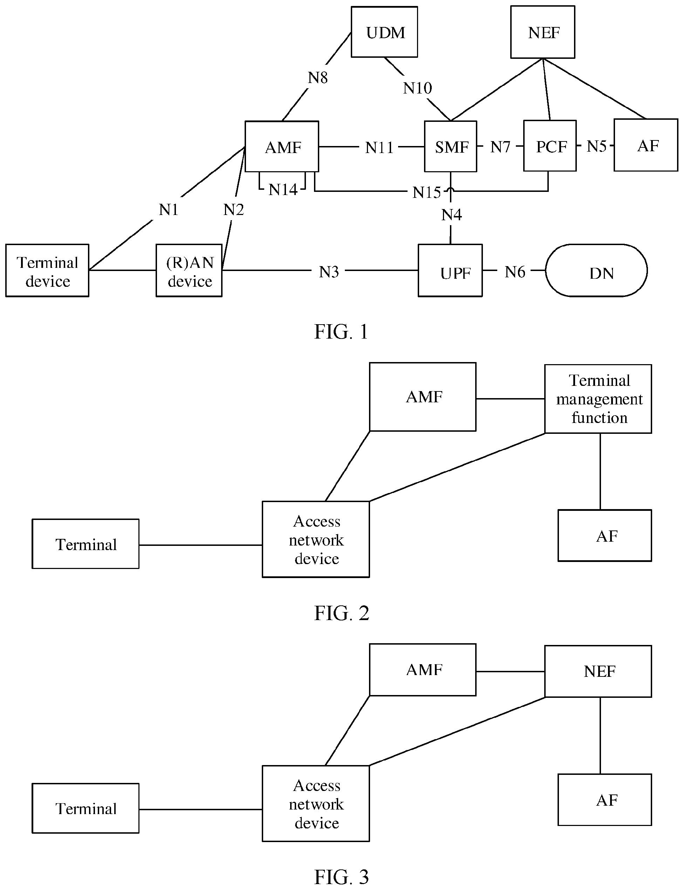

FIG. 1 is a schematic diagram of an architecture of a 3rd generation partnership project (3rd Generation Partnership Project, 3GPP) system in 5G. The system includes a terminal device, an access network device, a core network element, and a data network (data network, DN).

The terminal device may also be referred to as a terminal. The terminal device in embodiments of this application may be a passive terminal device or a semi-passive terminal device. The terminal device in embodiments of this application may also be referred to as a passive (passive) terminal device. The terminal device in embodiments of this application may be, for example, a tag or a user equipment (user equipment, UE). The terminal may be widely applied to various scenarios, for example, internet of things (internet of things, IoT), device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, remote medical, smart grid, smart furniture, smart office, smart wearable, smart transportation, and smart city. A specific technology and a specific device form that are used by the terminal are not limited in embodiments of this application. To describe the solutions in embodiments of this application more clearly, in some parts of embodiments of this application, the terminal device is a tag as an example.

In embodiments of this application, an apparatus configured to implement a function of a passive terminal may be a terminal device, or may be an apparatus, for example, a chip system, that can support the terminal device in implementing the function. The apparatus may be installed in the terminal device. In embodiments of this application, the chip system may include a chip, or may include a chip and another discrete device. In the technical solutions provided in embodiments of this application, an example in which an apparatus configured to implement a function of an electronic tag is a terminal device is used to describe the technical solutions provided in embodiments of this application.

The access network device is configured to connect the terminal device to a wireless network. The access network device may be a base station (base station), an evolved NodeB (evolved NodeB, eNodeB) in an LTE system or an LTE-Advanced (LTE-Advanced, LTE-A) system, a next generation NodeB (next generation NodeB, gNB) in a 5G communication system, a transmission reception point (transmission reception point, TRP), a baseband unit (baseband unit, BBU), a Wi-Fi access point (access point, AP), a base station in a future mobile communication system, an access node in a Wi-Fi system, or the like. The access network device may alternatively be a module or a unit that completes some functions of the base station, for example, may be a central unit (central unit, CU) or a distributed unit (distributed unit, DU). A specific technology and a specific device form that are used by the access network device are not limited in embodiments of this application. For example, in a network structure, the access network device may be a CU node, a DU node, or an access network device including a CU node and a DU node. Specifically, the CU node is configured to support protocols such as a radio resource control (radio resource control, RRC) protocol, a packet data convergence protocol (packet data convergence protocol, PDCP), and a service data adaptation protocol (service data adaptation protocol, SDAP). The DU node is configured to support a radio link control (radio link control, RLC) layer protocol, a medium access control (medium access control, MAC) layer protocol, and a physical layer protocol. The access network device may further include a read/write device such as a reader/writer and a reader, and an excitation device or an auxiliary device that can only send a downlink excitation signal or data to the electronic tag.

The core network element may include network elements such as a mobility management network element, a session management network element, a user plane network element, a data management network element, a unified data repository network element, a network exposure network element, an application function network element, a policy control network element, and a network repository function network element.

The mobility management network element is a control plane network element provided by an operator network, and is responsible for access control and mobility management for accessing the operator network by the terminal device, for example, including functions such as mobility status management, allocation of a temporary user identity, and user authentication and authorization. In 5G, the mobility management network element may be an AMF network element. In future communication, for example, in 6th generation (6th generation, 6G), the mobility management network element may still be an AMF network element, or may have another name. This is not limited in this application.

The session management network element is a control plane network element provided by an operator network, and is responsible for managing a protocol data unit (protocol data unit, PDU) session of the terminal device. The PDU session is a channel for transmitting a PDU, and the terminal device needs to transmit a PDU to the DN through the PDU session. An SMF network element is responsible for establishment, maintenance, deletion, and the like of the PDU session. The session management network element includes session-related functions such as session management (for example, session establishment, modification, and release, including tunnel maintenance between the user plane network element and the access network device), user plane network element selection and control, service and session continuity (Service and Session Continuity, SSC) mode selection, and roaming. In 5G, the session management network element may be an SMF network element. In future communication, for example, in 6G, the session management network element may still be an SMF network element, or may have another name. This is not limited in this application.

The user plane network element is a gateway provided by an operator, and is a gateway for communication between the operator network and the DN. A UPF network element includes user plane-related functions such as data packet routing and transmission, packet detection, service usage reporting, quality of service (Quality of Service, QoS) processing, lawful interception, uplink packet detection, and downlink data packet storage. In 5G, the user plane network element may be a UPF network element. In future communication, for example, in 6G, the user plane network element may still be a UPF network element, or may have another name. This is not limited in this application.

The data management network element is a control plane network element provided by the operator, and is responsible for storing information such as a subscriber permanent identifier (subscriber permanent identifier, SUPI), a credential (credential), a security context (security context), and subscription data of a subscriber in the operator network. The information stored in the data management network element may be used for authentication and authorization when the terminal device accesses the operator network. The subscriber in the operator network may be specifically a user who uses a service provided by the operator network, for example, a user who uses a SIM card of China Telecom, or a user who uses a SIM card of China Mobile. The subscription permanent identifier (Subscription Permanent Identifier, SUPI) of the subscriber may be a number of the SIM card or the like. The credential and the security context of the subscriber may be stored small files such as an encryption key of the SIM card or information related to encryption of the SIM card, and are used for authentication and/or authorization. The security context may be data (cookie), a token (token), or the like stored in a local terminal (for example, a mobile phone) of the user. The subscription data of the subscriber may be a supporting service of the SIM card, for example, a traffic package or a used network of the SIM card. It needs to be noted that the permanent identifier, the credential, the security context, the authentication data (cookie), the token, and the like are equivalent to information related to authentication and authorization. For ease of description, this is not distinguished or limited in this application document. Unless otherwise specified, in embodiments of this application, the security context is used as an example for description. However, embodiments of this application are also applicable to authentication and/or authorization information described in another manner. In 5G, the data management network element may be a UDM network element. In future communication, for example, in 6G, the data management network element may still be a UDM network element, or may have another name. This is not limited in this application.

The unified data repository network element is a control plane network element provided by the operator, and includes a function of accessing data of a type such as subscription data, policy data, and application data. In 5G, the unified data repository network element may be a UDR network element. In future communication, for example, in 6G, the unified data repository network element may still be a UDR network element, or may have another name. This is not limited in this application.

The network exposure network element is a control plane network element provided by the operator. The network exposure network element securely exposes an external interface of the operator network to a third party. When the session management network element needs to communicate with a network element of the third party, the network exposure network element may be used as a relay for communication between the session management network element and the network element of the third party. When serving as the relay, the network exposure network element may translate identification information of the subscriber and identification information of the network element of the third party. For example, when sending the SUPI of the subscriber from the operator network to the third party, the network exposure network element may translate the SUPI into a corresponding external identity (identity, ID) of the SUPI. On the contrary, when sending an external ID (an ID of the network element of the third party) to the operator network, the network exposure network element may translate the external ID into the SUPI. In 5G, the network exposure network element may be a NEF network element. In future communication, for example, in 6G, the network exposure network element may still be a NEF network element, or may have another name. This is not limited in this application.

The application function network element is configured to transfer a requirement of an application side for a network side, for example, a QoS requirement or a user status event subscription. The application function network element may be a functional entity of the third party, or may be an application server deployed by the operator. In 5G, the application function network element may be an AF network element. In future communication, for example, in 6G, the application function network element may still be an AF network element, or may have another name. This is not limited in this application.

The policy control network element is a control plane function provided by the operator, and is configured to provide a PDU session policy for the session management network element. The policy may include a charging-related policy, a QoS-related policy, an authorization-related policy, and the like. In 5G, the policy control network element may be a PCF network element. In future communication, for example, in 6G, the policy control network element may still be a PCF network element, or may have another name. This is not limited in this application.

The network repository function network element may be configured to provide a network element discovery function, and provide, based on a request from another network element, network element information corresponding to a network element type. The network repository function network element further provides a network element management service, for example, network element registration, update, and deregistration, and network element status subscription and push. In 5G, the network repository function network element may be an NRF network element. In future communication, for example, in 6G, the network repository function network element may still be an NRF network element, or may have another name. This is not limited in this application.

The DN is a network located outside the operator network. The operator network may access a plurality of DNs. A plurality of services may be deployed in the DN, and the DN may provide services such as a data service and/or a voice service for the terminal device. For example, the DN is a private network of a smart factory, a sensor installed in a workshop of the smart factory may be a terminal device, a control server of the sensor is deployed in the DN, and the control server may provide a service for the sensor. The sensor may communicate with the control server, to obtain instructions of the control server, transmit collected sensor data to the control server based on the instructions, and the like. For another example, the DN is an internal office network of a company, a mobile phone or a computer of an employee of the company may be a terminal device, and the mobile phone or the computer of the employee may access information, data resources, and the like in the internal office network of the company.

It may be understood that the network elements or the functions may be network elements in a hardware device, software functions running on dedicated hardware, or virtualized functions instantiated on a platform (for example, a cloud platform). One or more services may be obtained through division of the network elements or the functions. Further, services that exist independently of network functions may occur. In this application, instances of the functions, instances of services included in the functions, or instances of the services that exist independently of the network functions may be referred to as service instances.

Further, the AF network element may be an AF for short, the NEF network element may be a NEF for short, and the AMF network element may be an AMF for short. To be specific, the AF described subsequently in this application may be replaced with an application function network element, the NEF may be replaced with a network exposure function network element, and the AMF may be replaced with an access and mobility management function network element.

It should be understood that the application function network element in embodiments of this application may also be referred to as a back-end application system, and may be provided by a third party (that is, a third party other than an operator and a user). The AF network element in the 5G communication system may be used as an interface for the application function network element to access a core network. However, during actual application, the application function network element may be provided by the network operator, or may be provided by the third party. In a possible implementation, an authentication server and the application function network element in embodiments of this application may be deployed in the DN shown in FIG. 1.

It should be understood that FIG. 1 shows an interaction relationship between network function entities and corresponding interfaces. For example, a UE and an AMF network element may interact with each other through an N1 interface, an access network device and the AMF network element may interact with each other through an N2 interface, the access network device and a UPF network element may interact with each other through an N3 interface, the UPF network element and the DN may interact with each other through an N6 interface, and the UPF network element and an SMF network element may interact with each other through an N4 interface, the AMF network element and a PCF network element may interact with each other through an N15 interface, the AMF network element and the SMF network element may interact with each other through an N11 interface, the SMF network element and the PCF network element may interact with each other through an N7 interface, the PCF network element and an AF network element may interact with each other through an N5 interface, and the SMF network element and a UDM network element may interact with each other through an N10 interface. Interaction between other network function entities is similar, and details are not described again.

It may be understood that the network elements or the functions may be network elements in a hardware device, software functions running on dedicated hardware, or virtualized functions instantiated on a platform (for example, a cloud platform). Optionally, the network elements or the functions may be implemented by one device, may be implemented by a plurality of devices, or may be one functional module in one device. This is not specifically limited in embodiments of this application.

It should be understood that FIG. 1 is only an example of an applicable network architecture, and an actually applied network architecture may include more or fewer network elements than those in FIG. 1. Names of the network elements used in embodiments of this application may change in a future communication system while the functions may remain the same.

Based on the content above, FIG. 2 to FIG. 6 show examples of schematic diagrams of architectures of five communication systems applicable to embodiments of this application. As shown in FIG. 2 to FIG. 6, in embodiments of this application, a passive terminal is used as a new terminal device type, and an access network device performs a target operation (for example, a read operation/write operation) on information of the terminal under control of a core network element (for example, a terminal management function network element). The terminal management function network element is configured to manage a terminal. It may be understood that the terminal management function network element is only an example name, and a device that may implement a function corresponding to the terminal management function network element in this application may be understood as the terminal management function network element in this application.

As shown in FIG. 2, the communication system may include a terminal, an access network device, an AMF, a terminal management function network element, and an AF. The terminal management function network element may be connected to both the AMF and the AF.

As shown in FIG. 3, the communication system may include a terminal, an access network device, an AMF, a NEF, and an AF. The NEF or the AMF may implement a function corresponding to the terminal management function network element.

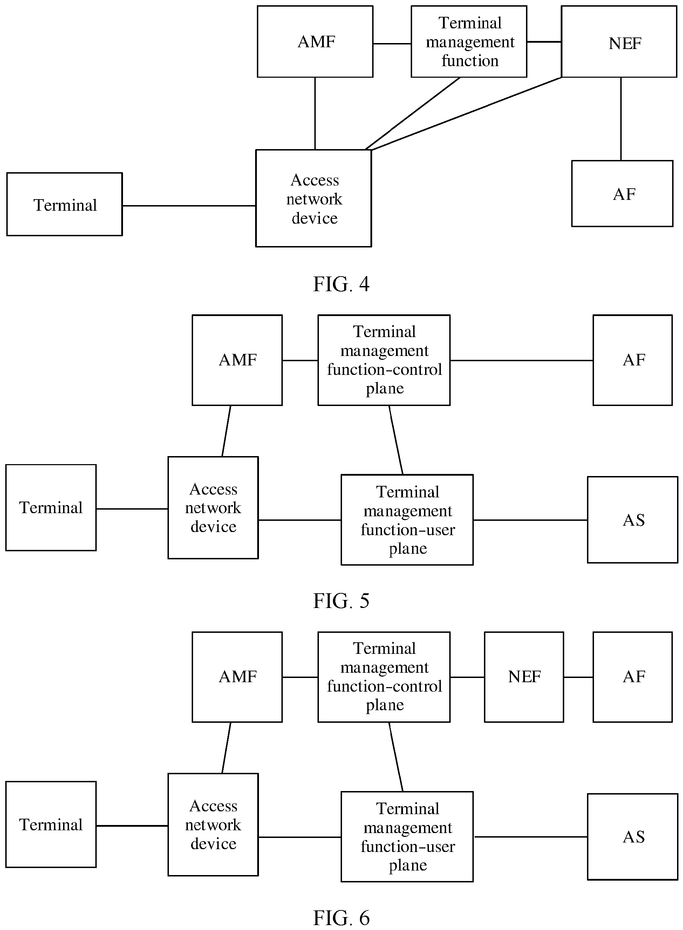

As shown in FIG. 4, the communication system may include a terminal, an access network device, a terminal management function network element, an AMF, a NEF, and an AF. The terminal management function network element may be connected to both the AMF and the NEF.

As shown in FIG. 5, the communication system may include a terminal, an access network device, a terminal management function network element, an AMF, and an AF. The terminal management function network element may include a user layer and a control layer. The control layer of the terminal management function network element is connected to the AF, and may be specifically connected to a control plane of the AF. The user plane of the terminal management function network element is connected to an application server (application server, AS).

As shown in FIG. 6, the communication system may include a terminal, an access network device, a terminal management function network element, an AMF, a NEF, and an AF. The terminal management function network element may include a user layer and a control layer. The control layer of the terminal management function network element is connected to the AF through the NEF, and may be specifically connected to a control plane of the AF through the NEF. The user plane of the terminal management function network element is connected to the AF, and may be specifically connected to a user plane of the AF.

FIG. 2 to FIG. 6 only show examples of five possible implementations. For descriptions of related network elements in FIG. 2 to FIG. 6, refer to the description in FIG. 1. Details are not described herein again.

The communication method provided in embodiments of this application may be applied to industry, an enterprise, agriculture, animal husbandry, forestry, and the like. In an example for description, the method may be applied to product management in industry. For example, a tag is carried on a product so that management such as scanning and statistics collection may be automatically performed on the product. In another example for description, the method may be applied to management of a device (for example, a pallet truck, a trailer, or an automated guided vehicle (automated guided vehicle, AGV)) in industry. For example, a tag is installed on the device so that a life cycle, utilization, a location, and the like of the device may be managed. In still another example for description, the method may be applied to management of a breeding product (for example, a pig, a cattle, a sheep, a chicken, or the like) in animal husbandry. For example, a tag is affixed on the breeding product so that management such as statistics collection of the breeding product may be implemented. In still another example for description, the method may be applied to tree management in forestry. For example, a tag is affixed on a tree so that management such as statistics collection of the tree may be implemented.

Network architectures and service scenarios described in embodiments of this application are intended to describe the technical solutions in embodiments of this application more clearly, and do not constitute a limitation on the technical solutions provided in embodiments of this application. A person of ordinary skill in the art may know that as the network architectures evolve and a new service scenario emerges, the technical solutions provided in embodiments of this application are also applicable to similar technical problems.

The following describes the technical solutions in embodiments of this application with reference to the accompanying drawings in embodiments of this application.

### Embodiment 1

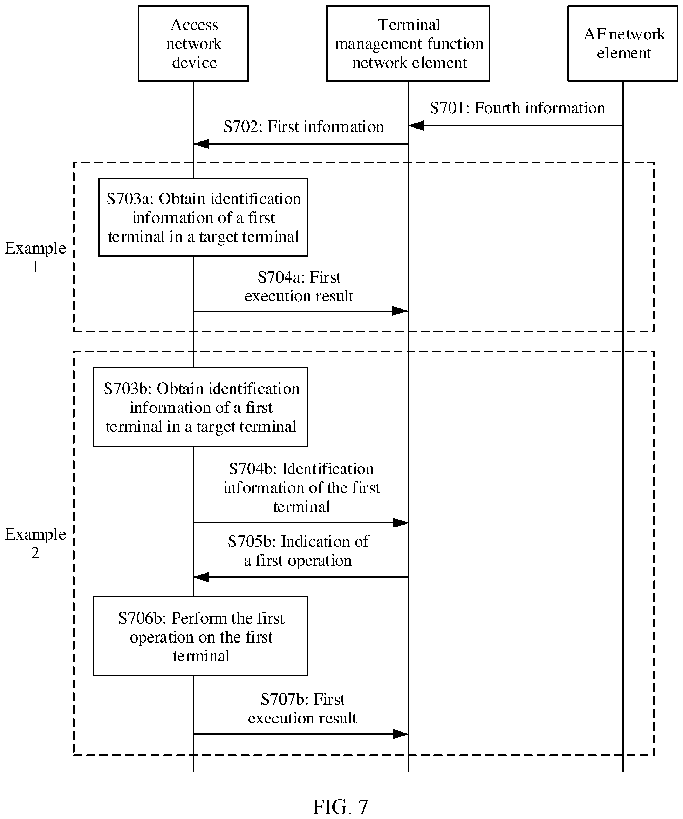

FIG. 7 is a schematic flowchart of a communication method according to this application. The method includes the following steps.

S701: An AF network element sends fourth information to a terminal management function network element. Correspondingly, the terminal management function network element receives the fourth information from the AF network element.

The fourth information is used for requesting to perform a first operation on a target terminal. The target terminal includes one or more terminals. For example, the first operation includes at least one of the following: an operation of obtaining an identifier of the target terminal (which may also be referred to as inventory, Inventory), a read operation, a write operation, a delete operation, an encryption operation, an access operation, a block write operation, a block erase operation, or a kill operation.

For example, the fourth information may carry at least one of the following: target terminal information, target area information A, and an application identifier. The target terminal information indicates the target terminal. For example, the target terminal information includes at least one of the following: indication information of the target terminal, an identifier value range of the target terminal, an identifier list of the target terminal, a group identifier of a target terminal group, identification information of a user to which the target terminal belongs, a type of the target terminal, or identification information of an application to which the target terminal belongs. It should be understood that the target terminal information may be some features of identification information of the target terminal.

The target area information A indicates an area corresponding to the target terminal. For example, the target area information A may be a geographic location, a municipal location, or 3GPP location information (for example, a tracking area (tracking area, TA) list, a cell list, or the like) corresponding to the target terminal.

The application identifier identifies the AF network element that initiates the first operation.

Optionally, the fourth information may further carry an operation parameter corresponding to the first operation. For example, the operation parameter corresponding to the read operation may include a read memory bank, a start word address of the read memory bank, a word quantity, and the like. The operation parameter corresponding to the write operation may include a write memory bank, a start word of the read memory bank, and written data. For the write operation, same information may be written for all terminals in the target terminal. That is, the fourth information may carry same written information for different terminals, or different information may be separately written for different terminals. That is, the fourth information may carry different written information for the different terminals.

In addition, the fourth information may further carry a second address and a first identifier. Optionally, the second address is an address used by the AF network element to receive the identification information of the target terminal and/or an execution result of the first operation performed by the target terminal. The first identifier identifies the fourth information of the AF network element.

Optionally, the fourth information may further carry a time interval (which may also be referred to as a time period or the like) for performing the first operation, a start time for performing the first operation, and an end time for performing the first operation.

In an implementation, the operation of obtaining the identifier of the target terminal may be explicitly indicated. For example, the fourth information may carry an indication of the operation of obtaining the identifier of the target terminal. Alternatively, the operation of obtaining the identifier of the target terminal may be implicitly indicated. For example, the fourth information may not carry an indication of any operation. The fourth information indicates the operation of obtaining the identifier of the target terminal.

For the architecture in FIG. 2 and the architecture in FIG. 3 in which the terminal management function network element is integrated into the NEF network element, the fourth information may be directly sent by the AF network element to the terminal management function network element.

For the architecture in FIG. 4, the fourth information is sent to the terminal management function network element through the NEF network element. In this case, the NEF network element may map the received fourth information and then send the mapped fourth information to the terminal management function network element. For example, the NEF network element maps the received geographic location to a cell list or a TA list.

S702: The terminal management function network element sends first information to an access network device. Correspondingly, the access network device receives the first information from the terminal management function network element.

The first information is used for obtaining the identification information of the target terminal. The first information may implicitly indicate to obtain the identification information of the target terminal. For example, the first information may indicate that an operation of a second terminal in the target terminal is completed. For example, the first information indicates that a first operation of the second terminal is completed. Alternatively, the first information may further indicate to obtain identification information of another terminal in the target terminal, or the first information may further indicate to perform one random access procedure.

Alternatively, the first information may explicitly indicate to obtain the identification information of the target terminal. For example, the first information may indicate to obtain the identification information of the target terminal, or the first information may be a query command used for querying the identification information of the target terminal.

Optionally, the first information may further carry the target terminal information or target area information B. The target area information B carried in the first information may be used for determining, in an area corresponding to the access network device, an area corresponding to the target terminal. In an implementation, the target area information B carried in the first information may be determined by the terminal management function network element based on the target area information A. For example, if the target area information A is a geographic location, a municipal location, or the like, the terminal management function network element may determine a corresponding TA list, a cell list, or the like based on the target area information A, to obtain the target area information B carried in the first information.

For the architecture in FIG. 2, the architecture in FIG. 4, and the architecture in FIG. 3 in which the terminal management function network element is integrated into the NEF network element, the first information may be sent to the access network device through the AMF network element. Specifically, the first information is encapsulated in a message A and sent to the AMF network element. The AMF network element parses the first information, encapsulates the first information in a message B, and sends the message B to the access network device.

Optionally, the first information may further include a first address. The first address is an address used by the terminal management function network element to receive the identification information of the target terminal and/or the execution result of the first operation performed by the target terminal.

Optionally, the first information may alternatively include the application identifier, a second identifier, the time interval of the first operation, the start time for performing the first operation, the end time for performing the first operation, and the like. The second identifier identifies the first information of the terminal management function network element, and is used for associating terminal information (for example, the identification information and the execution result) subsequently reported by the access network device with the first information.

In a possible implementation, the terminal management function network element may determine at least one AMF network element and an access network device corresponding to the at least one AMF network element based on information such as the target terminal information, the target area information A, the application identifier, and the like carried in the fourth information. The terminal management function network element sends the first information to the corresponding access network device through the at least one AMF network element. The following uses one of the access network devices as an example for description.

It needs to be noted that, for different AMF network elements or different access network devices, target area information carried in the first information may be different.

Optionally, the access network device may store the first information after receiving the first information.

In step S702, after receiving the first information, the access network device may manage the terminal by using a method described in Example 1 or Example 2 below.

Example 1: S703a and S704a may be performed after step S702. Optionally, the example may be implemented when the first operation is the operation of obtaining the identifier of the target terminal.

S703a: The access network device obtains identification information of a first terminal in the target terminal based on the first information.

In an implementation, the access network device sends radio frequency information to a terminal in a coverage area of the access network device, to provide an excitation signal to the terminal in the coverage area of the access network device, so that the terminal sends the signal to the access network device. In addition, the access network device performs a selection operation on terminals in the coverage area. Through the selection operation, one or more target terminals may be selected. Information of a target terminal in the selection operation is determined based on request information or based on a local configuration. Further, the access network device may send a query command to the one or more selected target terminals. After receiving the query command, the one or more selected target terminals initiate a random access procedure. If one of the terminals succeeds in random access, the terminal may be regarded as the first terminal in this embodiment. A specific random access procedure may be as follows: The access network device includes a first random number in the query command, and the one or more selected terminals set a second random number locally based on the first random number. When the second random number set by a terminal is 0, the terminal sends a third random number to the access network device. If the access network device can correctly receive the third random number, the access network device sends the third random number to the terminal. When the terminal receives the third random number, the terminal determines that random access succeeds, and the terminal is regarded as the first terminal in this embodiment. The first terminal sends a response message to the access network device. The response message carries the identification information of the first terminal.

S704a: The access network device sends a first execution result to the terminal management function network element. Correspondingly, the terminal management function network element receives the first execution result from the access network device.

The first execution result is a result of the first operation performed by the first terminal. In Example 1, the first execution result is the identification information of the terminal.

Optionally, the access network device may send the first execution result to the terminal management function network element based on the first address. For example, the access network device may send the second identifier and the first execution result to the terminal management function network element based on the first address.

Example 2: After step S702, the access network device may first query the target terminal, to obtain identification information of a first terminal in the target terminal. After the access network device sends the obtained identification information of the first terminal in the target terminal to the terminal management function network element, the terminal management function network element may indicate the access network device to perform a first operation on the first terminal. For a specific process, refer to S703b to S707b. Optionally, the example may be implemented when the first operation is an operation (for example, a read operation, a write operation, a delete operation, an encryption operation, an access operation, a block write operation, a block erase operation, a kill operation, or the like) other than the operation of obtaining the identifier of the target terminal.

S703b: The access network device obtains the identification information of the first terminal in the target terminal based on the first information.

For a specific implementation, refer to step S703a.

S704b: The access network device sends the identification information of the first terminal to the terminal management function network element. Correspondingly, the terminal management function network element receives the identification information of the first terminal from the access network device.

Optionally, the access network device may send the identification information of the first terminal to the terminal management function network element based on the first address. For example, the access network device may send the second identifier and the identification information of the first terminal to the terminal management function network element based on the first address.

S705b: The terminal management function network element sends an indication of the first operation to the access network device. Correspondingly, the access network device receives the indication of the first operation from the terminal management function network element.

Optionally, the terminal management function network element may further send, to the access network device, the operation parameter corresponding to the first operation. The indication of the first operation and the operation parameter corresponding to the first operation may be sent by using one message, or may be sent by using different messages.

S706b: The access network device performs the first operation on the first terminal according to the indication of the first operation.

In an implementation, the access network device may send the indication of the first operation to the first terminal. The first terminal sends the first execution result to the access network device.

S707b: The access network device sends the first execution result to the terminal management function network element. Correspondingly, the terminal management function network element receives the first execution result from the access network device.

The first execution result is a result of the first operation performed by the first terminal. In Example 2, the first execution result is a result of performing an operation such as a read operation, a write operation, or the like by the first terminal. For example, if the first operation is a read operation, the first execution result may be read data. If the first operation is a write operation, the first execution result is an indication indicating that the write operation succeeds or the write operation fails.

Optionally, the access network device may send the first execution result to the terminal management function network element based on the first address. For example, the access network device may send the second identifier and the first execution result to the terminal management function network element based on the first address.

Optionally, based on any one of Example 1 and Example 2, after receiving the first execution result from the access network device, the terminal management function network element may further send third information to the access network device. The third information is used for obtaining identification information of another target terminal. Specifically, the third information may indicate to complete an operation on the first terminal. In an example, the third information may indicate to complete an operation on a single terminal. Therefore, when the access network device performs the first operation on the target terminal again, it may also be understood that the access network device continues to perform an operation on a next terminal. A specific process is as follows.

The access network device sends a query repeat command to the one or more selected target terminals, to trigger a random access procedure. After receiving the query repeat command, the one or more selected target terminals other than the first terminal initiate a random access procedure. If one of the terminals succeeds in random access, the terminal is a third terminal in this embodiment. A specific random access procedure may be as follows: After receiving the query repeat command, the first terminal exits from a counting process, that is, no longer responds to an operation request of the selected target terminal. Another selected target terminal subtracts 1 from the previously specified second random number. If a second random number of a terminal is subtracted to 0, the terminal sends a fourth random number to the access network device. If the access network device can correctly receive the fourth random number, the access network device sends the fourth random number to the terminal. When the terminal receives the fourth random number, the terminal determines that random access succeeds, and the terminal is regarded as a third terminal. After the third terminal succeeds in random access, the third terminal sends a response message to the access network device. The response message carries identification information that is of the third terminal and that is sent by the access network device. For a specific process of another step, refer to S704a in Example 1 or S704b to S707b in Example 2. Details are not described herein again.

In a possible implementation, before S703a or S703b, the access network device may determine that the first information does not carry a start time and/or an end time, or determine that the first information carries a start time and a current time is not earlier than the start time, and/or the first information carries an end time and the current time is not later than the end time.

In another implementation, before S702, the terminal management function network element may determine that the fourth information does not carry a start time and/or an end time, or determine that the fourth information carries a start time and a current time is not earlier than the start time, and/or the fourth information carries an end time and the current time is not later than the end time.

Optionally, after sending the first execution result to the terminal management function network element, the access network device: determines that the operation of obtaining the identification information of the target terminal is completed, that is, the operation of obtaining the identifier of the target terminal is completed; and sends second information to the terminal management function network element. The second information indicates that an operation on the target terminal is completed. In an example, the second information may indicate that operations on all terminals are completed.

In an example, that the access network device determines that the operation of obtaining the identification information of the target terminal is completed may be implemented in the following manner: After sending the query command/the query repeat command to the target terminal, the access network device does not receive a response message from the terminal within preset duration.

In a possible scenario, an area indicated by the target area information A may cover a plurality of access network devices, and the terminal management function network element may send the first information to the plurality of access network devices. For an execution process of the plurality of access network devices, refer to an execution process of the access network device in the method shown in FIG. 7. In this scenario, after determining that identification information of all terminals in the target terminal is obtained, any one of the plurality of access network devices may send the second information to the terminal management function network element. After receiving the second information from the plurality of access network devices, the terminal management function network element sends fifth information to the AF network element. The fifth information indicates to complete an operation on the target terminal.

Optionally, after sending the second information to the terminal management function network element, the access network device may obtain the identification information of the target terminal again after the time interval carried in the first information, for example, send the query repeat command to the target terminal again. It is assumed that a process in which the access network device performs the first operation on each of the target terminals is considered as an execution process, and the second information may indicate that the current execution process ends. After the foregoing time interval, the obtaining the identification information of the target terminal again may be understood as triggering a new execution process.

To facilitate understanding of Embodiment 1 of this application, the following specifically describes a terminal management process with reference to the communication system shown in FIG. 2.

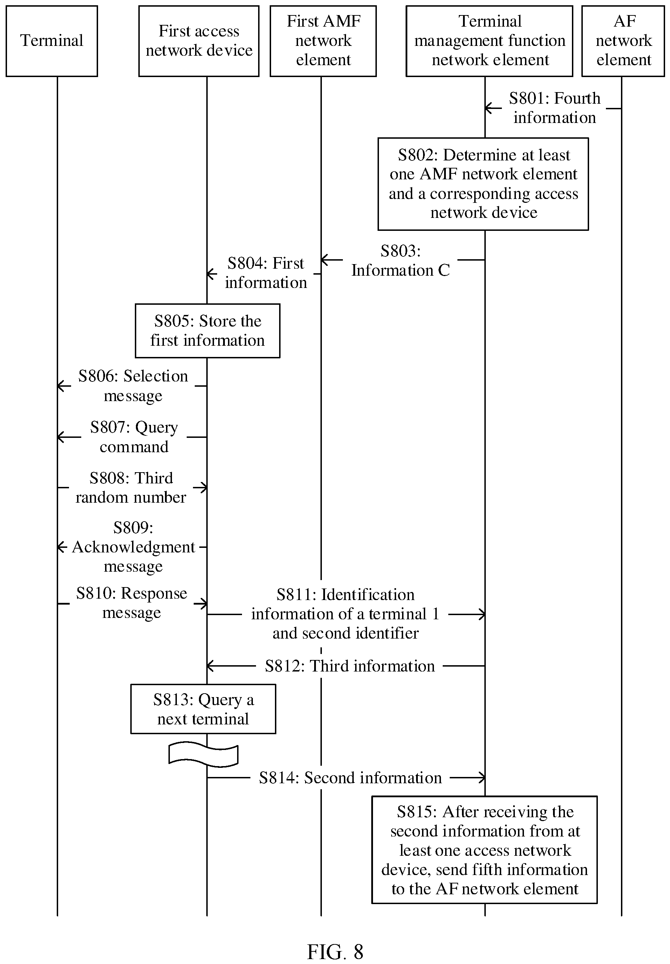

With reference to Example 1, as shown in FIG. 8, a terminal management process includes the following steps.

S801: The AF network element sends the fourth information to the terminal management function network element.

The fourth information is used for requesting to perform the first operation on the target terminal. The fourth information may carry at least one of the following: the target terminal information, the target area information A, the application identifier, the second address, the first identifier, the time interval, the start time, and the end time.

Optionally, the fourth information may not carry an indication of the first operation that identifies the operation of obtaining the identifier of the target terminal, or may carry an indication of the first operation, that is, the operation of obtaining the identifier of the target terminal.

For the architecture in FIG. 2 and the architecture in FIG. 3 in which the terminal management function network element is integrated into the NEF network element, the fourth information may be directly sent by the AF network element to the terminal management function network element.

For the architecture in FIG. 4, the fourth information is sent to the terminal management function network element through the NEF network element. In this case, the NEF network element may map the received fourth information and then send the mapped fourth information to the terminal management function network element. For example, the NEF network element maps the received geographic location to a geographic location.

S802: The terminal management function network element determines at least one AMF network element and a corresponding access network device.

Specifically, the terminal management function network element may determine the at least one AMF network element and the corresponding access network device based on information such as the target terminal information, the target area information A, the application identifier, and the like carried in the fourth information. The following uses a first AMF network element in the at least one AMF network element and a first access network device corresponding to the first AMF network element as an example for description. It should be understood that, for an action performed by another AMF network element, refer to an action performed by the first AMF network element. For an action performed by another access network device, refer to an action performed by the first access network device.

S803: The terminal management function network element sends information C to the first AMF network element.

The information C is used for obtaining the identification information of the target terminal, or may be understood as that the information C is used for performing the first operation on the target terminal. The information C may carry at least one of the following: the indication of the first operation, the target terminal information, target area information D, the application identifier, the first address, the second identifier, the time interval, the start time, and the end time. The information C is an area corresponding to the target terminal in an area managed by the first AMF network element.

In a possible implementation, if the target area information D indicates a geographic location, an administrative location, or the like, the terminal management function network element determines a TA list, a cell list, or the like based on the target area information A.

Optionally, if an area indicated by the target area information A corresponds to a plurality of AMF network elements, the terminal management function network element may send the information C to the plurality of AMF network elements.

In an implementation, the terminal management function network element may send the information C to the first AMF network element when the fourth information does not carry a start time and/or an end time, or when it is determined that the fourth information carries a start time and a current time is not earlier than the start time, and/or the fourth information carries an end time and the current time is not later than the end time.

S804: The first AMF network element sends the first information to the first access network device.

That the first information is used for obtaining the identification information of the target terminal may also be understood as that the first information is used for performing the first operation on the target terminal. The first information may carry at least one of the following: the target terminal information, the target area information B, the application identifier, the first address, the second identifier, the time interval, the start time, and the end time. The target area information B may be an area corresponding to the target terminal in an area managed by the first access network device.

Optionally, if an area indicated by the target area information D covers a plurality of access network devices, the AMF network element may send the first information to the plurality of access network devices.

In another embodiment, step S803 and step S804 may be further implemented as follows: The terminal management function network element may encapsulate the first information in a message (1) and send the message (1) to the first AMF network element. The message (1) may include identification information of the first access network device. After decapsulating the message (1), a first AMF encapsulates the first information in a message (2) based on the identification information of the first access network device, and then sends the message (2) to the first access network device. The first AMF may transparently transmit the first information.

S805: The first access network device stores the first information.

S806: The first access network device sends a selection message to at least one terminal in a coverage range. The selection message is used for setting an inventory identifier of the target terminal.

The selection message carries the target terminal information.

Optionally, the first access network device may send the selection message to the at least one terminal when the first information does not carry a start time and/or an end time, or when it is determined that the first information carries a start time and a current time is not earlier than the start time, and/or the first information carries an end time and the current time is not later than the end time. The message is a terminal inventory identifier that meets the foregoing target terminal information.

S807: The first access network device sends a query command to one or more selected terminals. The query command carries the inventory identifier and the first random number. The one or more selected terminals set the second random number based on the first random number.

S808: When the second random number set by a terminal (it is assumed that the terminal is a terminal 1) is 0, the terminal 1 sends the third random number to the first access network device.

S809: The first access network device can correctly receive the third random number, and the first access network device sends an acknowledgment message including the third random number to the terminal 1.

S810: The terminal 1 sends a response message to the first access network device.

The terminal 1 receives the third random number and the terminal 1 determines that random access succeeds. The terminal 1 sends the response message to the first access network device.

The response message carries identification information of the terminal 1.

S811: Optionally, the first access network device sends the identification information of the terminal 1 and the second identifier to the terminal management function network element based on the first address.

The terminal management function network element determines, based on the second identifier, that the identification information corresponds to the fourth information.

S812: The terminal management function network element sends third information to the first access network device.

The third information indicates that obtaining the identification information of the terminal 1 is completed, and performing a first operation on the terminal 1 is completed or querying a next terminal is completed. Alternatively, the third information may further indicate to perform one random access procedure.

S813: The first access network device queries a next terminal after receiving the third information. Details are as follows.

The first access network device sends the query repeat command to the one or more selected terminals. After receiving the query repeat command, the terminal 1 does not respond to an operation request of the selected target terminal. Another selected target terminal subtracts 1 from the previously specified second random number. If a second random number of a terminal (it is assumed that the terminal is a terminal 2) is subtracted to 0, the terminal 2 performs step S808, and then performs steps S809 to S813. Repeated parts are not described again.

S814: The first access network device sends second information to the terminal management function network element.

The second information indicates the first access network device to complete the first operation on the target terminal.

After sending the query command/the query repeat command, the first access network device determines to complete the first operation on the target terminal if a random number sent by the terminal is not received within preset duration.

S815: After receiving the second information from the at least one access network device, the terminal management function network element may send fifth information to the AF network element.

The fifth information indicates to complete an operation on the target terminal.

Optionally, after receiving identification information of each terminal, the terminal management function network element may send the identification information of each terminal to the AF network element. For example, the terminal management function network element may send the identification information of each terminal and the first identifier to the AF network element based on the second address. The terminal management function network element determines the first identifier based on the second identifier.

Specifically, the terminal management function network element may report the identification information of each terminal to the AF network element after receiving identification information of a terminal, or may report identification information of all target terminals to the AF network element after receiving the identification information of all the target terminals, or may report the identification information to the AF network element at an interval.

It needs to be noted that S801, S802, S803, S805, S806, S808, S809, and S813 to S815 may be optional steps.

It needs to be noted that the terminal management function network element may perform signaling interaction with the access network device through the AMF network element.

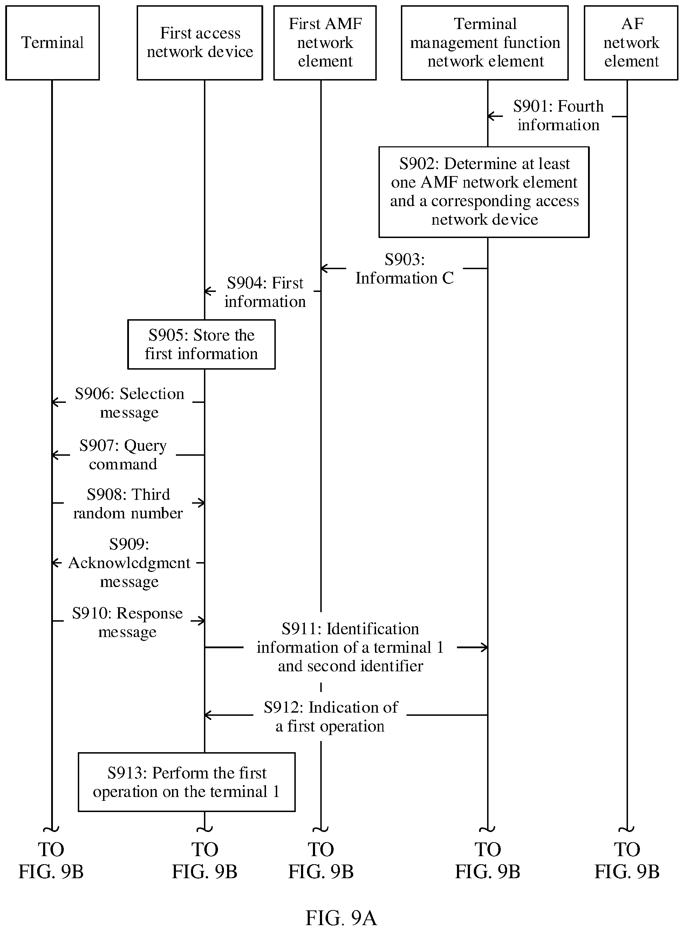

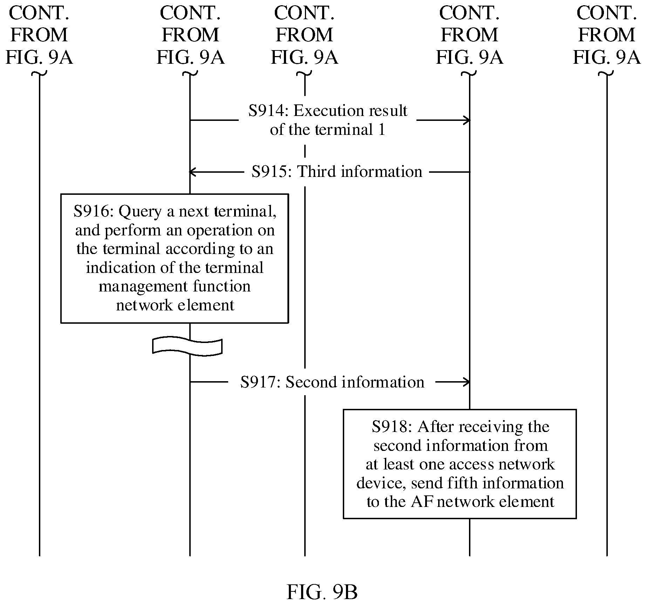

With reference to Example 2, as shown in FIG. 9A and FIG. 9B, a terminal management process includes the following steps.

For S901 to S911, refer to S801 to S811. It should be noted that, in the method shown in FIG. 8, the fourth information indicates the operation of obtaining the identifier of the target terminal, and the fourth information in FIG. 9A may indicate a first operation other than the operation of obtaining the identifier of the target terminal. For example, the first operation includes at least one of the following: a read operation, a write operation, a delete operation, an encryption operation, an access operation, a block write operation, a block erase operation, or a kill operation. Optionally, in the method in FIG. 9A, the fourth information may further carry a parameter of the first operation.

S912: The terminal management function network element sends the indication of the first operation to the first access network device.

Optionally, the terminal management function network element may further send the parameter of the first operation to the first access network device.

S913: The first access network device performs a first operation on the terminal 1.

S914: The first access network device sends an execution result of the terminal 1 to the terminal management function network element.

S915: The terminal management function network element sends third information to the first access network device.

The third information indicates to complete the first operation performed on the terminal 1 or indicates to query a next terminal. Alternatively, the third information may further indicate to perform one random access procedure.

S916: After receiving the third information, the first access network device queries a next terminal, and performs an operation on the terminal according to an indication of the terminal management function network element.

It may be understood that a process in which the first access network device performs counting on the next terminal and performs the operation on the terminal according to the indication of the terminal management function network element is specifically as follows.

The first access network device sends the query repeat command to the one or more selected terminals, to trigger execution of a random access procedure. After receiving the query repeat command, the terminal 1 does not respond to an operation request of the selected target terminal. Another selected target terminal subtracts 1 from the previously specified second random number. If a second random number of a terminal (a terminal 2) is subtracted to 0, the terminal 2 performs step S908, and then performs S909 to S916. Repeated parts are not described again.

It needs to be noted that operations performed by the first access network device on different electronic devices may be the same or may be different. This is not limited herein.

Optionally, after receiving an execution result of each terminal, the terminal management function network element may send the execution result to the AF network element. For example, the terminal management function network element may send the execution result of each terminal and the first identifier to the AF network element based on the second address. The terminal management function network element determines the first identifier based on the second identifier.

Specifically, the terminal management function network element may report the execution result of each terminal to the AF network element after receiving an execution result of a terminal, or may report execution results of all target terminals to the AF network element after receiving the execution results of all the target terminals, or may report the execution result to the AF network element at an interval.

S917: The first access network device sends second information to the terminal management function network element.

The second information indicates the first access network device to complete the first operation on the target terminal.

After sending the query command/the query repeat command, the first access network device determines to complete the first operation on the target terminal if the third random number sent by the terminal is not received within preset duration.

S918: After receiving the second information from the at least one access network device, the terminal management function network element may send fifth information to the AF network element.

The fifth information indicates to complete the first operation on the target terminal.

It needs to be noted that the terminal management function network element may perform signaling interaction with the access network device through the AMF network element.

In addition, FIG. 8, FIG. 9A, and FIG. 9B are described with reference to the communication system shown in FIG. 2. With reference to the communication system shown in FIG. 3, the terminal management function network element in the methods in FIG. 8, FIG. 9A, and FIG. 9B may be replaced with a NEF network element. That is, the NEF network element performs an action of the terminal management function network element in the methods in FIG. 8, FIG. 9A, and FIG. 9B. With reference to the communication system shown in FIG. 4, when the terminal management function network element performs signaling interaction with the AF network element in the methods in FIG. 8, FIG. 9A, and FIG. 9B, the signaling may be forwarded through the NEF network element.

It needs to be noted that S901, S902, S903, S905, S906, S908, S909, and S916 to S918 may be optional steps.

With reference to the communication system shown in FIG. 5 or FIG. 6, Embodiment 1 of this application may specifically control execution of the first operation through a control plane of the terminal management function network element. For example, after receiving the identification information of the terminal, the control plane of the terminal management function network element sends an indication of the first operation to the access network device. In addition, after receiving the execution result of the terminal, the control plane of the terminal management function network element may send the execution result to an AS through a user plane of the terminal management function network element. The following describes a terminal management process with reference to the communication system shown in FIG. 5.

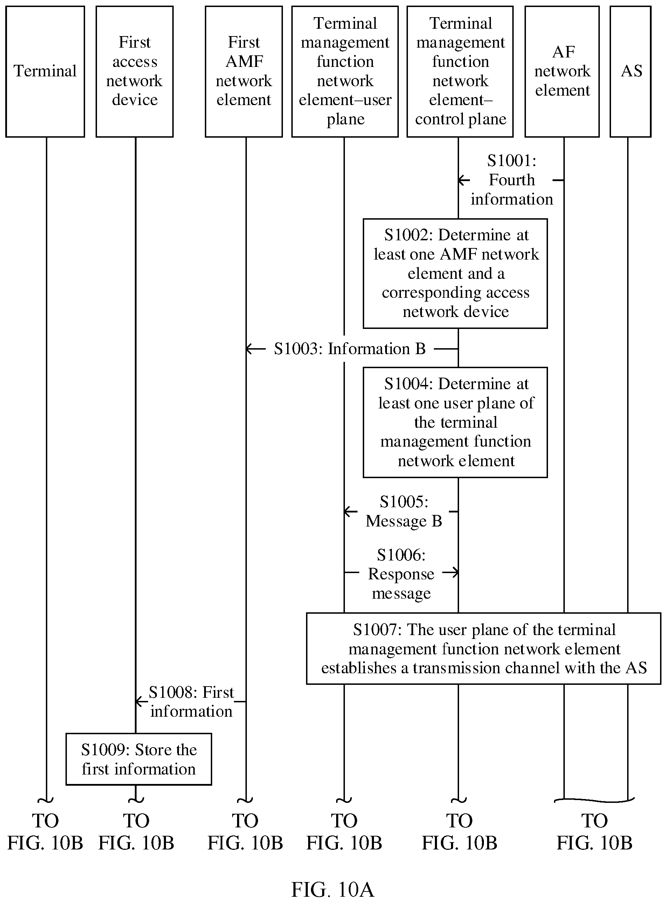

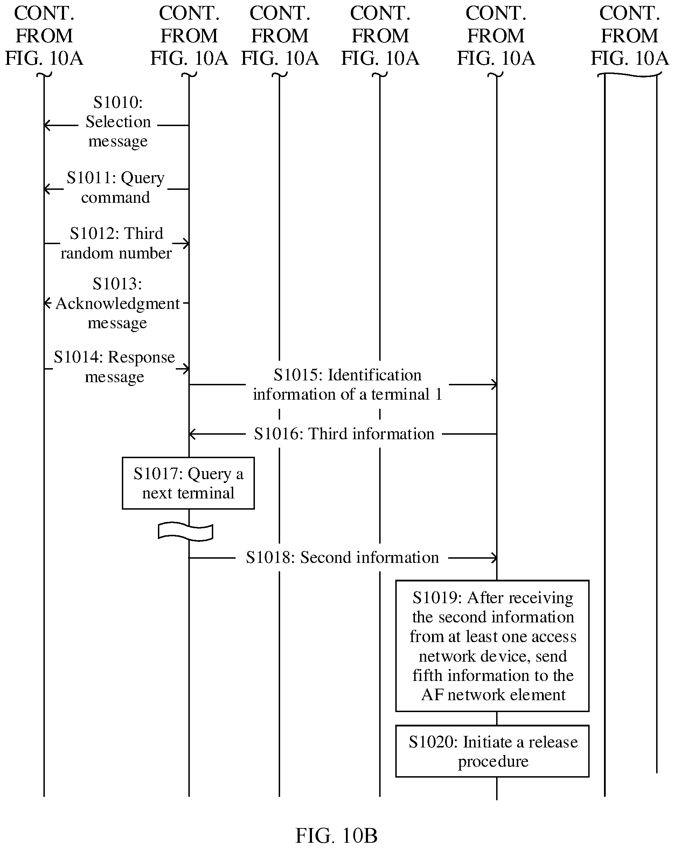

With reference to Example 1, as shown in FIG. 10A and FIG. 10B, a terminal management process may include the following steps.

S1001: The AF network element sends the fourth information to the control plane of the terminal management function network element.

For the fourth information, refer to related descriptions of S901. Details are not described herein again.

Optionally, the fourth information may further carry address information of the AS, and information about a transmission channel between the user plane of the terminal management function network element and the AS.

S1002: The control plane of the terminal management function network element determines at least one AMF network element and a corresponding access network device.

For details, refer to related descriptions of S902.

S1003: The control plane of the terminal management function network element sends information B to a first AMF network element.

For details, refer to related descriptions of S903.

It needs to be noted that a sequence of performing S1003 and S1004 to S1007 is not limited.

S1004: The control plane of the terminal management function network element determines at least one user plane of the terminal management function network element.

Specifically, the control plane of the terminal management function network element may determine the at least one user plane of the terminal management function network element based on information such as the application identifier carried in the fourth information. The following uses a user plane of the terminal management function network element as an example for description.

S1005: The control plane of the terminal management function network element sends a message B to the user plane of the terminal management function network element.

The message B is used for establishing a transmission channel such as a tunnel between the control plane of the terminal management function network element and the user plane of the terminal management function network element. The message B carries transmission channel information of a transmission channel between the user plane of the terminal management function network element and the AS. The transmission channel information may be indicated by the AF network element, or may be determined by the control plane of the terminal management function network element based on configuration information.

In an implementation, the control plane of the terminal management function network element may send the message B to the user plane of the terminal management function network element when the fourth information does not carry a start time and/or an end time, or when it is determined that the fourth information carries a start time and a current time is not earlier than the start time, and/or the fourth information carries an end time and the current time is not later than the end time.

S1006: The user plane of the terminal management function network element sends a response message to the control plane of the terminal management function network element.

S1007: The user plane of the terminal management function network element establishes the transmission channel with the AS.

S1008: The first AMF network element sends the first information to the first access network device.

For details, refer to related descriptions of S804.

S1009: The first access network device stores the first information.

S1010: The first access network device sends a selection message to at least one terminal in a coverage range. The selection message is used for setting an inventory identifier of the target terminal.

For details, refer to related descriptions of S806.

S1011: The first access network device sends a query command to one or more selected terminals. The query command carries an inventory identifier and the first random number. The one or more selected terminals set the second random number based on the first random number.

For details, refer to related descriptions of S807.

S1012: When the second random number set by a terminal (it is assumed that the terminal is a terminal 1) is 0, the terminal 1 sends the third random number to the first access network device.

For details, refer to related descriptions of S808.

S1013 : The first access network device can correctly receive the third random number, and the access network device sends an acknowledgment message including the third random number to the terminal 1.

S1014: The terminal 1 sends a response message of the query command to the first access network device.

The response message carries identification information of the terminal 1.

For details, refer to related descriptions of S810.

S1015: Optionally, the first access network device sends the identification information of the terminal 1 to the control plane of the terminal management function network element.

For details, refer to related descriptions of S811.

S1016: The control plane of the terminal management function network element sends the third information to the first access network device.

For details, refer to related descriptions of S812.

S1017: The first access network device queries a next terminal after receiving the third information.

For details, refer to related descriptions of S813.

S1018: The first access network device sends second information to the control plane of the terminal management function network element.

The second information indicates the first access network device to complete the first operation on the target terminal.

For details, refer to related descriptions of S814.

S1019: After receiving the second information from the at least one access network device, the control plane of the terminal management function network element may send fifth information to the AF network element.

The fifth information indicates to complete the first operation on the target terminal.

Optionally, after receiving identification information of each terminal, the control plane of the terminal management function network element may send the identification information of each terminal to the user plane of the terminal management function network element, and the user plane of the terminal management function network element sends the identification information of the terminal to the AS.

Specifically, the control plane of the terminal management function network element may report the identification information to the AS through the user plane of the terminal management function network element after receiving identification information of a terminal, or may report identification information of all target terminals to the AS through the user plane of the terminal management function network element after receiving the identification information of all the target terminals, or may report the identification information to the AS through the user plane of the terminal management function network element at an interval.

S1020: The control plane of the terminal management function network element initiates a release procedure. The release procedure is used for releasing the transmission channel between the user plane of the terminal management function network element and the AS.

It needs to be noted that S1001 to S1007, S1009, S1010, S1012, S1013, and S1017 to S1020 may be optional steps.

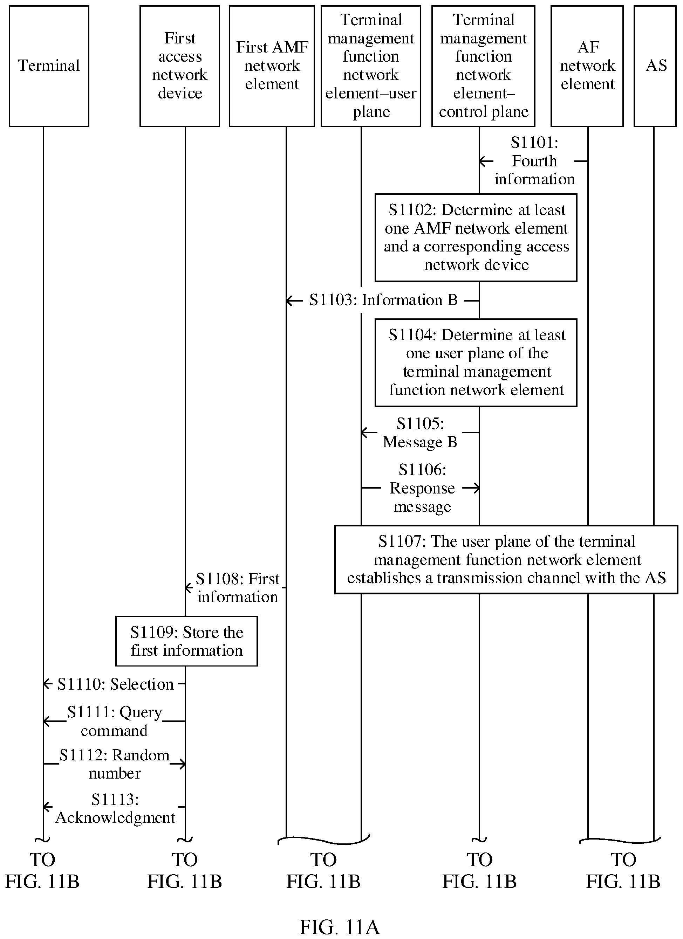

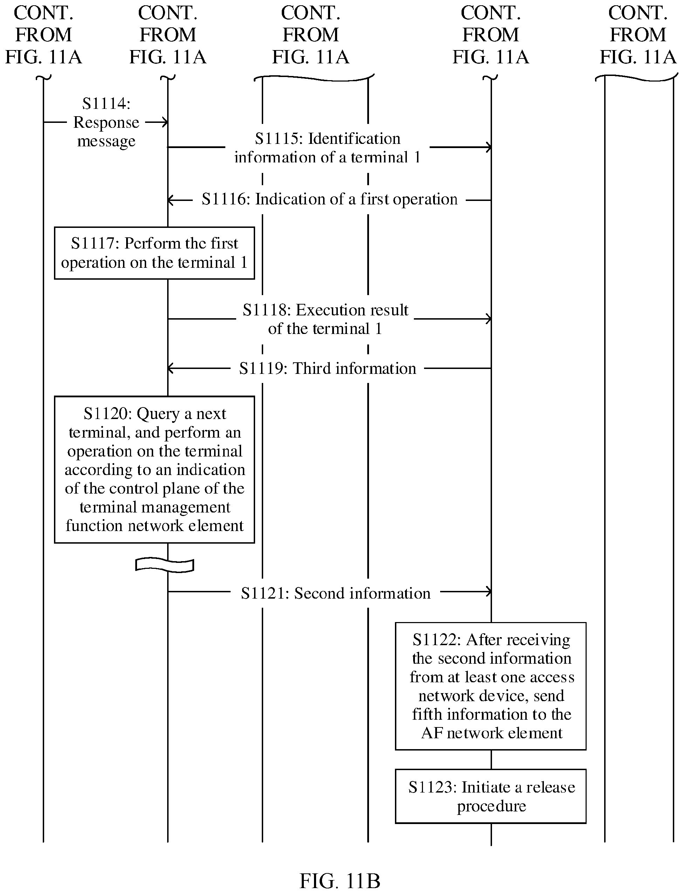

With reference to Example 2, as shown in FIG. 11A and FIG. 11B, a terminal management process includes the following steps.

For S1101 to S1115, refer to S1001 to S1015. It should be noted that, in the method shown in FIG. 10A, the fourth information indicates that a counting operation is performed, and the fourth information in FIG. 11A may indicate a first operation other than the counting operation. For example, the first operation includes at least one of the following: a read operation, a write operation, a delete operation, an encryption operation, an access operation, a block write operation, a block erase operation, or a kill operation. Optionally, in the method in FIG. 11A, the fourth information may further carry a parameter of the first operation.

S1116: The control plane of the terminal management function network element sends an indication of the first operation to the first access network device.

Optionally, the control plane of the terminal management function network element may further send the parameter of the first operation to the first access network device.

S1117: The first access network device performs a first operation on the terminal 1.

S1118: The first access network device sends an execution result of the terminal 1 to the control plane of the terminal management function network element.

S1119: The control plane of the terminal management function network element sends the third information to the first access network device.

The third information indicates to complete the first operation performed on the terminal 1 or indicates to query a next terminal. Alternatively, the third information may further indicate to perform one random access procedure.

S1120: After receiving the third information, the first access network device queries the next terminal, and performs an operation on the terminal according to an indication of the control plane of the terminal management function network element.

It may be understood that, for a process in which the first access network device performs counting on the next terminal and performs the operation on the terminal according to the indication of the control plane of the terminal management function network element, refer to step S916. Repeated parts are not described again.

It needs to be noted that operations performed by the first access network device on different electronic devices may be the same or may be different. This is not limited herein.

Optionally, after receiving an execution result of each terminal, the control plane of the terminal management function network element may send the execution result to the AS through the user plane of the terminal management function network element.

Specifically, the control plane of the terminal management function network element may report the execution result to the AS through the user plane of the terminal management function network element after receiving an execution result of a terminal, or may report execution results of all target terminals to the AS through the user plane of the terminal management function network element after receiving the execution results of all the target terminals, or may report the execution result to the AS through the user plane of the terminal management function network element at an interval.

S1121: The first access network device sends second information to the control plane of the terminal management function network element.

The second information indicates to complete an operation on the target terminal.

S1122: After receiving the second information from the at least one access network device, the control plane of the terminal management function network element may send fifth information to the AF network element.

The fifth information indicates to complete an operation on the target terminal.

It needs to be noted that the control plane of the terminal management function network element may perform signaling interaction with the access network device through the AMF network element.

S1123: The control plane of the terminal management function network element initiates a release procedure. The release procedure is used for releasing the transmission channel between the user plane of the terminal management function network element and the AS.

It needs to be noted that S1101 to S1107, S1109, S1110, S1112, S1113, and S1120 to S1123 may be optional steps.

FIG. 10A, FIG. 10B, FIG. 11A, and FIG. 11B are described with reference to the communication system shown in FIG. 5. With reference to the communication system shown in FIG. 6, when the control plane of the terminal management function network element performs signaling interaction with the AF network element in the methods in FIG. 10A, FIG. 10B, FIG. 11A, and FIG. 11B, the signaling may be forwarded through the NEF network element.

In Embodiment 1 of this application, the terminal management function network element manages the terminal based on a request of the AF network element. In Embodiment 1 of this application, the access network device sends the execution result to the terminal management function network element so that the terminal management function network element can forward the execution result to the AF network element. According to the method provided in Embodiment 1 of this application, a communication distance between the access network device and the terminal is not limited, so that the access network device may manage terminals in a scenario in which the terminals are deployed on a large scale.

Embodiment 2: Embodiment 2 is similar to Embodiment 1. A difference lies in that in Embodiment 1, the terminal management function network element controls execution of the first operation. For example, after receiving identification information of a terminal, the terminal management function network element sends an indication of the first operation to the access network device. However, in Embodiment 2, an AMF network element controls execution of a first operation. For example, after receiving fourth information, a terminal management function network element sends an indication of the first operation to the AMF network element, so that the AMF network element sends the indication of the first operation to an access network device after receiving an identifier of a terminal. The following describes Embodiment 2 in detail.

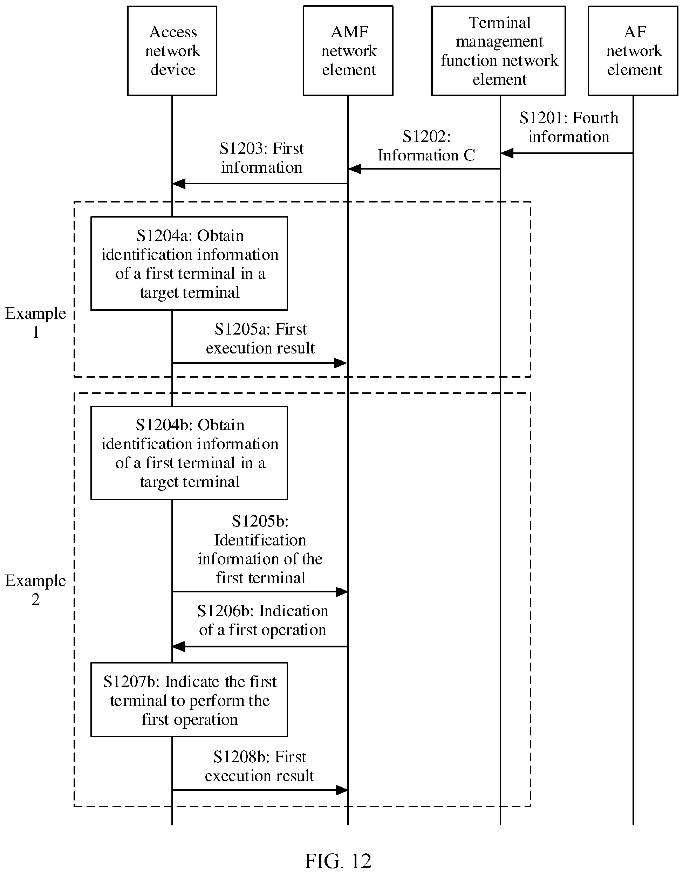

FIG. 12 is a schematic flowchart of a communication method according to this application. The method includes the following steps.

S1201: An AF network element sends the fourth information to the terminal management function network element. Correspondingly, the terminal management function network element receives the fourth information from the AF network element.

For S1201, refer to related descriptions of S701 in Embodiment 1. Details are not described herein again.

S1202: The terminal management function network element sends information C to the AMF network element.

For the information C, refer to related descriptions in Embodiment 1. Details are not described herein again.

Optionally, the information C may further carry an indication and/or a parameter of the first operation.

In a possible implementation, the terminal management function network element may determine at least one AMF network element and an access network device corresponding to the at least one AMF network element based on information such as target terminal information, target area information A, an application identifier, and the like carried in the fourth information. The terminal management function network element may send the information C to the at least one AMF network element. In this application, one of the access network devices is used as an example for description.

S1203: The AMF network element sends first information to the access network device. Correspondingly, the access network device receives the first information from the terminal management function network element.

For the first information and for an implementation of S1203, refer to related descriptions in Embodiment 1. Details are not described herein again.

Optionally, a first AMF network element may send the first information to a first access network device when the information C does not carry a start time and/or an end time, or when it is determined that information A carries a start time and a current time is not earlier than the start time, and/or when the information C carries an end time and the current time is not later than the end time.

After S1203, after receiving the first information, the access network device may manage the terminal by using a method described in Example 3 or Example 4 below.

Example 3: After step S1203, S1204a and S1205a may be performed. Optionally, the example may be implemented when the first operation is an operation of obtaining an identifier of a target terminal.

S 1204a: The access network device obtains identification information of a first terminal in the target terminal based on the first information.

In an implementation, the access network device sends a query command to the target terminal. The first terminal in the target terminal sends a response message to the access network device. The response message carries the identification information of the first terminal sent by the access network device.

For S1204a, refer to related descriptions of S703a. Details are not described herein again.

S1205a: The access network device sends a first execution result to the AMF network element. Correspondingly, the AMF network element receives the first execution result from the access network device.

The first execution result is a result of the first operation performed by the first terminal. In Example 1, the first execution result is the identification information of the terminal.

Example 4: After step S1203, the access network device may first query a target terminal, to obtain identification information of a first terminal in the target terminal. After the access network device sends the obtained identification information of the first terminal in the target terminal to the AMF network element, the AMF network element may indicate the access network device to perform a first operation on the first terminal. For a specific process, refer to S1204b to S1208b. Optionally, the example may be implemented when the first operation is an operation (for example, a read operation, a write operation, a delete operation, an encryption operation, an access operation, a block write operation, a block erase operation, a kill operation, or the like) other than an operation of obtaining an identifier of the target terminal.

S1204b: The access network device obtains the identification information of the first terminal in the target terminal based on the first information.

For a specific implementation, refer to step S703a.

S1205b: The access network device sends the identification information of the first terminal to the AMF network element. Correspondingly, the AMF network element receives the identification information of the first terminal from the access network device.

S1206b: The AMF network element sends the indication of the first operation to the access network device. Correspondingly, the access network device receives the indication of the first operation from the AMF network element.

Optionally, the AMF network element may further send, to the access network device, an operation parameter corresponding to the first operation. The indication of the first operation and the operation parameter corresponding to the first operation may be sent by using one message, or may be sent by using different messages.

S1207b: The access network device performs the first operation on the first terminal according to the indication of the first operation.

In an implementation, the access network device may send the indication of the first operation to the first terminal. The first terminal sends the first execution result to the access network device.

S1208b: The access network device sends the first execution result to the AMF network element. Correspondingly, the AMF network element receives the first execution result from the access network device.

The first execution result is a result of the first operation performed by the first terminal. In Example 2, the first execution result is a result of performing an operation such as a read operation, a write operation, or the like by the first terminal. For example, if the first operation is a read operation, the first execution result may be read data. If the first operation is a write operation, the first execution result is an indication indicating that the write operation succeeds or the write operation fails.

Optionally, based on any one of Example 3 and Example 4, after receiving the first execution result from the access network device, the AMF network element may further send third information to the access network device. The third information is used for obtaining identification information of another target terminal. For this process, refer to related descriptions in Embodiment 1. Similarities are not described again.

Optionally, after sending the first execution result to the AMF network element, the access network device: determines that an operation of obtaining the identification information of the target terminal is completed, that is, the operation of obtaining the identifier of the target terminal is completed; and sends second information to the AMF network element. The second information indicates that an operation on the target terminal is completed. For this process, refer to related descriptions in Embodiment 1. Similarities are not described again.

In a possible scenario, an area indicated by the target area information A may cover a plurality of access network devices, and the AMF network element may send the first information to the plurality of access network devices. For an execution process of the plurality of access network devices, refer to an execution process of the access network device in the method shown in FIG. 12. In this scenario, after determining that identification information of all terminals in the target terminal is obtained, any one of the plurality of access network devices may send the second information to the AMF network element. After receiving the second information from the plurality of access network devices, the AMF network element sends fifth information to the AF network element. The fifth information indicates to complete an operation on the target terminal.

Optionally, after sending the second information to the AMF network element, the access network device may obtain the identification information of the target terminal again after a time interval carried in the first information. For this process, refer to related descriptions in Embodiment 1. Similarities are not described again.

Optionally, in Embodiment 1 of this application, when the AMF network element performs signaling interaction with the AF network element, the signaling may be forwarded through the terminal management function network element.

To facilitate understanding of Embodiment 2 of this application, the following describes a terminal management process with reference to Example 3 and Example 4 by using the communication system shown in FIG. 2 as an example.

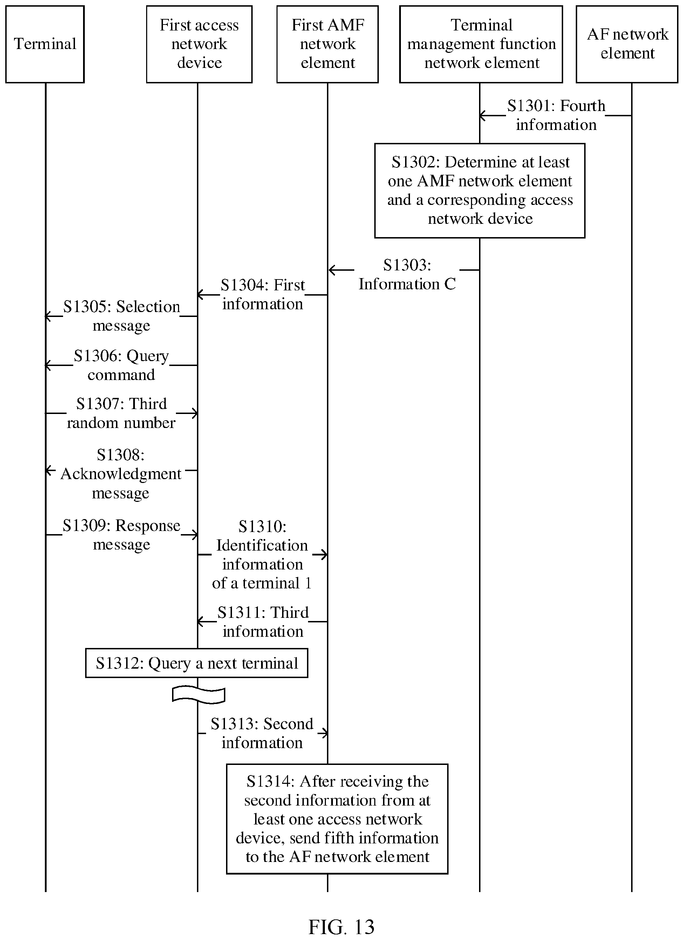

With reference to Example 3, as shown in FIG. 13, a terminal management process includes the following steps.

S1301: The AF network element sends the fourth information to the terminal management function network element.

For S1301, refer to related descriptions of S801 in Embodiment 1. Details are not described herein again.

S1302: The terminal management function network element determines at least one AMF network element and a corresponding access network device.

For S1302, refer to related descriptions of S802. Details are not described herein again.

S1303: The terminal management function network element sends the information C to the first AMF network element.

For S1303, refer to related descriptions of S803 in Embodiment 1. Details are not described herein again.

Optionally, the information C may further carry the indication and/or the parameter of the first operation.

S1304: The first AMF network element sends the first information to the first access network device.

Optionally, the first AMF network element may send the first information to the first access network device when information B does not carry a start time and/or an end time, or when it is determined that the information A carries a start time and a current time is not earlier than the start time, and/or when the information B carries an end time and the current time is not later than the end time.

For S1304, refer to related descriptions of S804 in Embodiment 1. Details are not described herein again.

S1305: The first access network device sends a selection message to at least one terminal in a coverage range. The selection message is used for setting an inventory identifier of the target terminal.

S1306: The first access network device sends a query command to one or more selected terminals. The query command carries an inventory identifier and a first random number. The one or more selected terminals set a second random number based on the first random number.

S1307: When the second random number set by a terminal (it is assumed that the terminal is a terminal 1) is 0, the terminal 1 sends a third random number to the first access network device.

S1308: The first access network device can correctly receive the third random number, and the first access network device sends an acknowledgment message including the third random number to the terminal 1.

S1309: The terminal 1 sends a response message to the first access network device.

S1305 to S1309 are similar to S806 to S810 in Embodiment 1. For details, refer to related descriptions in Embodiment 1. Similarities are not described again.

Optionally, in S1310, the first access network device sends identification information of the terminal 1 to the first AMF network element.

S1311: The first AMF network element sends the third information to the first access network device.

The third information indicates that obtaining the identification information of the terminal 1 is completed, and performing a first operation on the terminal 1 is completed or querying a next terminal is completed. Alternatively, the third information may further indicate to perform one random access procedure.

S1312: The first access network device queries a next terminal after receiving the third information.

For details, refer to S813. Details are not described herein again.

S1313: The first access network device sends the second information to the first AMF network element.

The second information indicates the first access network device to complete a first operation on the target terminal.

After sending the query command/a query repeat command, the first access network device determines to complete the first operation on the target terminal if a random number sent by the terminal is not received within preset duration.

S1314: After receiving the second information from the at least one access network device, the first AMF network element may send the fifth information to the AF network element.

The fifth information indicates to complete an operation on the target terminal.

Optionally, after receiving identification information of each terminal, the first AMF network element may send the identification information to the terminal management function network element. Specifically, the first AMF network element may report the identification information of each terminal to the terminal management function network element after receiving identification information of a terminal, or may report identification information of all target terminals to the terminal management function network element after receiving the identification information of all the target terminals, or may report the identification information to the terminal management function network element at an interval.

Optionally, after receiving the identification information of each terminal, the terminal management function network element may send the identification information of each terminal to the AF network element. For example, the terminal management function network element may send the identification information of each terminal and a first identifier to the AF network element based on a second address.

Specifically, the terminal management function network element may report the identification information of each terminal to the AF network element after receiving identification information of a terminal, or may report identification information of all target terminals to the AF network element after receiving the identification information of all the target terminals, or may report the identification information to the AF network element at an interval.

It needs to be noted that S301, S1302, S1303, S1305, S1307, S1308, and S1312 to S1314 may be optional steps.

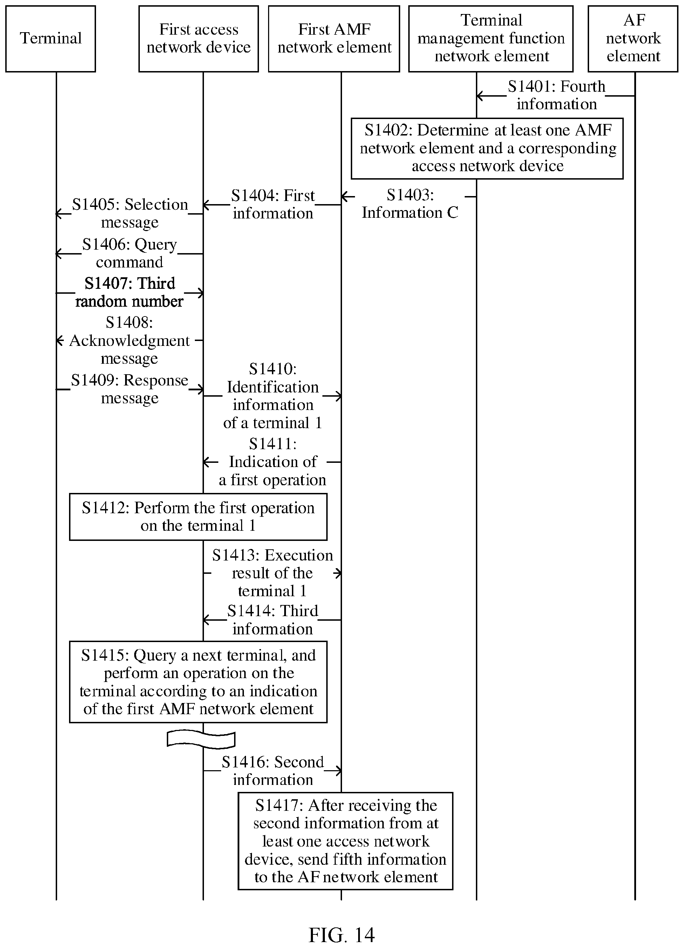

With reference to Example 4, as shown in FIG. 14, a terminal management process includes the following steps.

For S1401 to S1410, refer to S1301 to S1310. It should be noted that, in the method shown in FIG. 13, the fourth information indicates that a counting operation is performed, and the fourth information in FIG. 14 may indicate a first operation other than the counting operation. For example, the first operation includes at least one of the following: a read operation, a write operation, a delete operation, an encryption operation, an access operation, a block write operation, a block erase operation, or a kill operation. Optionally, in the method in FIG. 14, the fourth information may further carry a parameter of the first operation.

S1411: The first AMF network element sends the indication of the first operation to the first access network device.

Optionally, the first AMF network element may further send the parameter of the first operation to the first access network device.

S1412: The first access network device performs a first operation on a terminal 1.

S1413: The first access network device sends an execution result of the terminal 1 to the first AMF network element.

S1414: The first AMF network element sends the third information to the first access network device.

The third information indicates to complete the first operation performed on the terminal 1 or indicates to query a next terminal. Alternatively, the third information may further indicate to perform one random access procedure.

S1415: After receiving the third information, the first access network device queries a next terminal, and operates the terminal according to an indication of the first AMF network element.

For details, refer to related descriptions of S916.

S1416: The first access network device sends the second information to the first AMF network element.

The second information indicates the first access network device to complete a first operation on the target terminal.

After sending a query command/a query repeat command, the first access network device determines to complete the first operation on the target terminal if a third random number sent by the terminal is not received within preset duration.

S1417: After receiving the second information from the at least one access network device, the first AMF network element may send the fifth information to the AF network element.

The fifth information indicates to complete the first operation on the target terminal.

Optionally, after receiving an execution result of each terminal, the first AMF network element may send the execution result to the terminal management function network element. Specifically, the first AMF network element may report the execution result of each terminal to the terminal management function network element after receiving the execution result of the terminal, or may report execution results of all target terminals to the terminal management function network element after receiving the execution results of all the target terminals, or may report the execution result to the terminal management function network element at an interval.

Optionally, after receiving the execution result of each terminal, the terminal management function network element may send the execution result to the AF network element. For example, the terminal management function network element may send the execution result of each terminal and a first identifier to the AF network element based on a second address.

Specifically, the terminal management function network element may report the execution result of each terminal to the AF network element after receiving an execution result of a terminal, or may report execution results of all target terminals to the AF network element after receiving the execution results of all the target terminals, or may report the execution result to the AF network element at an interval.

It needs to be noted that S1401, S1402, S1403, S1405, S1407, S1408, and S1415 to S1417 may be optional steps.

In addition, FIG. 13 and FIG. 14 are described with reference to the communication system shown in FIG. 2. With reference to the communication system shown in FIG. 3, the terminal management function network element in the methods in FIG. 13 and FIG. 14 may be replaced with a NEF network element. That is, the NEF network element performs an action of the terminal management function network element in the methods in FIG. 13 and FIG. 14. With reference to the communication system shown in FIG. 4, when the terminal management function network element performs signaling interaction with the AF network element in the methods in FIG. 13 and FIG. 14, the signaling may be forwarded through the NEF network element.

In Embodiment 2 of this application, the AMF network element manages the terminal based on a request of the AF network element. In Embodiment 2 of this application, the access network device sends the execution result to the AMF network element so that the AMF network element can forward the execution result to the AF network element through the terminal management function network element. According to the method provided in Embodiment 2 of this application, a communication distance between the access network device and the terminal is not limited, so that the access network device may manage terminals in a scenario in which the terminals are deployed on a large scale.

### Embodiment 3

Embodiment 3 is similar to Embodiment 1. A difference lies in that in Embodiment 1, the terminal management function network element controls execution of the first operation. For example, after receiving identification information of a terminal, the terminal management function network element sends an indication of the first operation to the access network device. However, in Embodiment 3, an AF network element controls execution of a first operation. For example, after obtaining identification information of a terminal, an access network device sends the identification information of the terminal to the AF network element. After receiving the identification information of the terminal, the AF network element sends an indication of the first operation to the access network device. The following describes Embodiment 3 in detail.

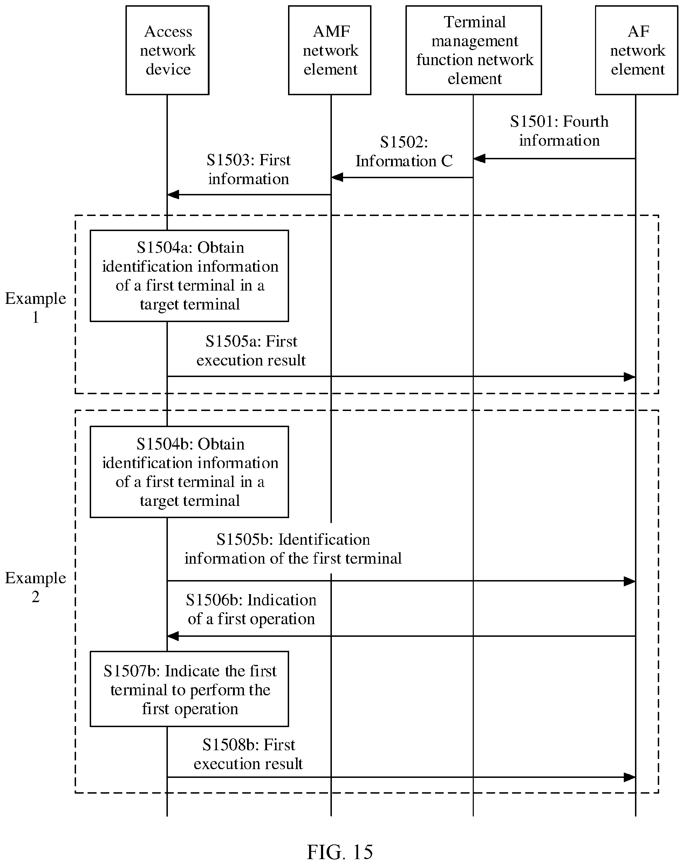

FIG. 15 is a schematic flowchart of a communication method according to this application. The method includes the following steps.

S1501: The AF network element sends fourth information to the terminal management function network element. Correspondingly, the terminal management function network element receives the fourth information from the AF network element.

For S1501, refer to related descriptions of S701 in Embodiment 1. Details are not described herein again.

S1502: The terminal management function network element sends information C to an AMF network element.

For the information C, refer to related descriptions in Embodiment 1. Details are not described herein again.

Optionally, the information C may further carry the indication and/or a parameter of the first operation.

In a possible implementation, the terminal management function network element may determine at least one AMF network element and an access network device corresponding to the at least one AMF network element based on information such as target terminal information, target area information A, an application identifier, and the like carried in the fourth information. The terminal management function network element may send the information C to the at least one AMF network element. In this application, one of the access network devices is used as an example for description.

S1503: The AMF network element sends first information to the access network device. Correspondingly, the access network device receives the first information from the terminal management function network element.

For the first information and for an implementation of S1503, refer to related descriptions in Embodiment 1. Details are not described herein again.

After S1503, after receiving the first information, the access network device may manage the terminal by using a method described in Example 5 or Example 6 below.

Example 5: After step S1503, S1504a and S1505a may be performed. Optionally, the example may be implemented when the first operation is an operation of obtaining an identifier of a target terminal.

S 1504a: The access network device obtains identification information of a first terminal in the target terminal based on the first information.

For S1504a, refer to related descriptions of S703a. Details are not described herein again.

S1505a: The access network device sends a first execution result to the AF network element. Correspondingly, the AF network element receives the first execution result from the access network device.

The first execution result is a result of the first operation performed by the first terminal. In Example 1, the first execution result is the identification information of the terminal.

Example 6: After step S1503, the access network device may first query a target terminal, to obtain identification information of a first terminal in the target terminal. After the access network device sends the obtained identification information of the first terminal in the target terminal to the AF network element, the AF network element may indicate the access network device to perform a first operation on the first terminal. For a specific process, refer to S1504b to S1508b. Optionally, the example may be implemented when the first operation is an operation (for example, a read operation, a write operation, a delete operation, an encryption operation, an access operation, a block write operation, a block erase operation, a kill operation, or the like) other than an operation of obtaining an identifier of the target terminal.

S1504b: The access network device obtains the identification information of the first terminal in the target terminal based on the first information.

For a specific implementation, refer to step S703a.

S1505b: The access network device sends the identification information of the first terminal to the AF network element. Correspondingly, the AF network element receives the identification information of the first terminal from the access network device.

S 1506b: The AF network element sends an indication of the first operation to the access network device. Correspondingly, the access network device receives the indication of the first operation from the AF network element.

The indication of the first operation indicates to perform the first operation on the first terminal.

Optionally, the AF network element may further send, to the access network device, an operation parameter corresponding to the first operation. The indication of the first operation and the operation parameter corresponding to the first operation may be sent by using one message, or may be sent by using different messages.

S1507b: The access network device performs the first operation on the first terminal according to the indication of the first operation.

In an implementation, the access network device may send the indication of the first operation to the first terminal. The first terminal sends a first execution result to the access network device.

S1508b: The access network device sends the first execution result to the AF network element. Correspondingly, the AF network element receives the first execution result from the access network device.

The first execution result is a result of the first operation performed by the first terminal. In Example 2, the first execution result is a result of performing an operation such as a read operation, a write operation, or the like by the first terminal. For example, if the first operation is a read operation, the first execution result may be read data. If the first operation is a write operation, the first execution result is an indication indicating that the write operation succeeds or the write operation fails.

Optionally, based on any one of Example 5 and Example 6, after receiving the first execution result from the access network device, the AF network element may further send third information to the access network device. The third information is used for obtaining identification information of another target terminal. For this process, refer to related descriptions in Embodiment 1. Similarities are not described again.

Optionally, after sending the first execution result to the AF network element, the access network device: determines that an operation of obtaining the identification information of the target terminal is completed, that is, the operation of obtaining the identifier of the target terminal is completed; and sends second information to the AF network element. The second information indicates that an operation on the target terminal is completed. For this process, refer to related descriptions in Embodiment 1. Similarities are not described again.

In a possible scenario, an area indicated by the target area information A may cover a plurality of access network devices, and the AF network element may send the first information to the plurality of access network devices. For an execution process of the plurality of access network devices, refer to an execution process of the access network device in the method shown in FIG. 15. In this scenario, after determining that identification information of all terminals in the target terminal is obtained, any one of the plurality of access network devices may send the second information to the AF network element. After receiving the second information from the plurality of access network devices, the AF network element determines that an operation on the target terminal is completed.

Optionally, after sending the second information to the AF network element, the access network device may obtain the identification information of the target terminal again after a time interval carried in the first information. For this process, refer to related descriptions in Embodiment 1. Similarities are not described again.

Optionally, in Embodiment 3 of this application, when the access network device performs signaling interaction with the AF network element, the signaling may be forwarded through the AMF network element and the terminal management function network element.

For ease of understanding of Embodiment 3 of this application, the following describes a terminal management process with reference to Example 5 and Example 6 by using the communication system shown in FIG. 2 as an example.

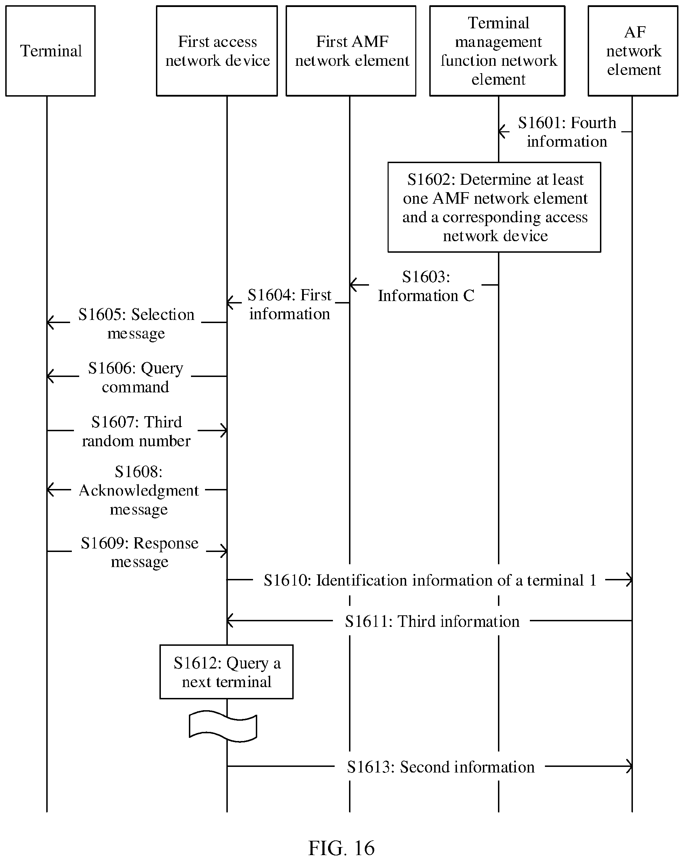

With reference to Example 5, as shown in FIG. 16, a terminal management process includes the following steps.

S1601: The AF network element sends the fourth information to the terminal management function network element.

For S1601, refer to related descriptions of S801 in Embodiment 1. Details are not described herein again.

S1602: The terminal management function network element determines at least one AMF network element and a corresponding access network device.

For S1602, refer to related descriptions of S802. Details are not described herein again.

S1603: The terminal management function network element sends the information C to a first AMF network element.

For S1603, refer to related descriptions of S803 in Embodiment 1. Details are not described herein again.

Optionally, the information C may further carry the indication and/or the parameter of the first operation.

S1604: The first AMF network element sends the first information to a first access network device.

Optionally, the first AMF network element may send the first information to the first access network device when information B does not carry a start time and/or an end time, or when it is determined that information A carries a start time and a current time is not earlier than the start time, and/or when the information B carries an end time and the current time is not later than the end time.

For S1604, refer to related descriptions of S804 in Embodiment 1. Details are not described herein again.

S1605: The first access network device sends a selection message to at least one terminal in a coverage range. The selection message is used for setting an inventory identifier of the target terminal.

S1606: The first access network device sends a query command to one or more selected terminals. The query command carries an inventory identifier and a first random number. The one or more selected terminals set a second random number based on the first random number.

S1607: When the second random number set by a terminal (it is assumed that the terminal is a terminal 1) is 0, the terminal 1 sends a third random number to the first access network device.

S1608: The first access network device can correctly receive the third random number, and the first access network device sends an acknowledgment message including the third random number to the terminal 1.

S1609: The terminal 1 sends a response message to the first access network device.

S1605 to S1609 are similar to S806 to S810 in Embodiment 1. For details, refer to related descriptions in Embodiment 1. Similarities are not described again.

S1610: The first access network device sends identification information of the terminal 1 to the AF network element.

S1611: The AF network element sends the third information to the first access network device.

S1612: The first access network device queries a next terminal after receiving the third information.

For details, refer to S813. Details are not described herein again.

S1613: The first access network device sends the second information to the AF network element.

The second information indicates the first access network device to complete a first operation on the target terminal.

After sending the query command/a query repeat command, the first access network device determines to complete the first operation on the target terminal if a random number sent by the terminal is not received within preset duration.

Optionally, after receiving identification information of each terminal, the first access network device may send the identification information to the AF network element. Specifically, the first access network device may report the identification information of each terminal to the AF network element after receiving identification information of a terminal, or may report identification information of all target terminals to the AF network element after receiving the identification information of all the target terminals, or may report the identification information to the AF network element at an interval.

It needs to be noted that S1601, S1602, S1603, S1605, S1607, S1608, S1612, and S1613 may be optional steps.

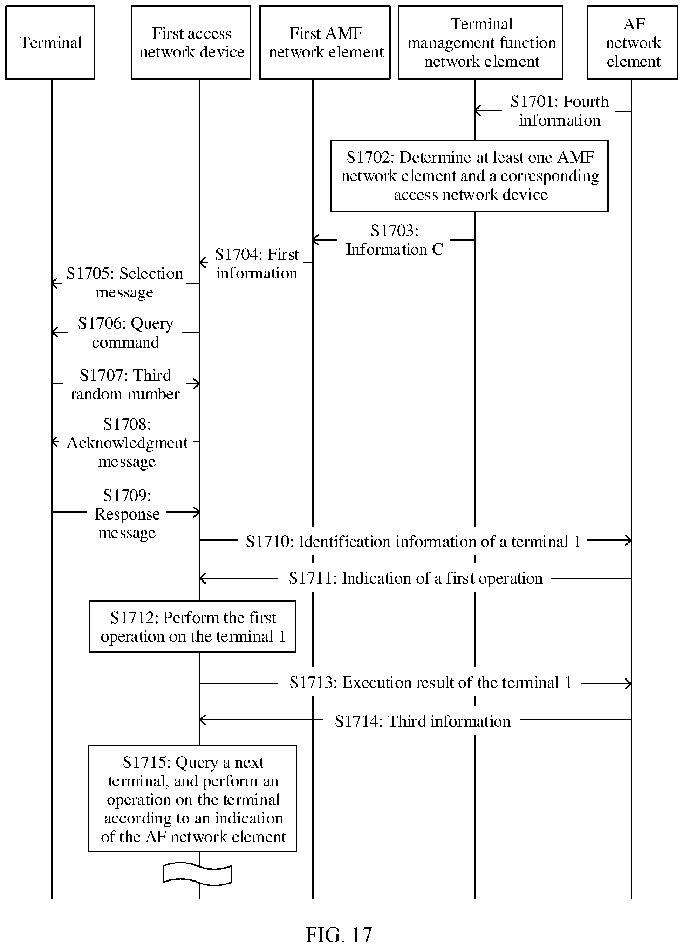

With reference to Example 6, as shown in FIG. 17, a terminal management process includes the following steps.

For S1701 to S1710, refer to S1601 to S1610. It should be noted that, in the method shown in FIG. 16, the fourth information indicates that a counting operation is performed, and the fourth information in FIG. 17 may indicate a first operation other than the counting operation. For example, the first operation includes at least one of the following: a read operation, a write operation, a delete operation, an encryption operation, an access operation, a block write operation, a block erase operation, or a kill operation. Optionally, in the method in FIG. 17, the fourth information may further carry a parameter of the first operation.

S1711: The AF network element sends the indication of the first operation to a first access network device.

Optionally, the AF network element may further send the parameter of the first operation to the first access network device.

S1712: The first access network device performs a first operation on a terminal 1.

S1713: The first access network device sends an execution result of the terminal 1 to the AF network element.

S1714: The AF network element sends the third information to the first access network device.

The third information indicates that obtaining identification information of the terminal 1 is completed.

S1715: After receiving the third information, the first access network device queries a next terminal, and operates the terminal according to an indication of the AF network element. For details, refer to related descriptions of S916.

Optionally, the first access network device may report the execution result of each terminal to the AF network element after receiving an execution result of a terminal, or may report execution results of all target terminals to the AF network element after receiving the execution results of all the target terminals, or may report the execution result to the AF network element at an interval.

In the method in FIG. 16 or FIG. 17, the first access network device and the AF network element may communicate with each other through the AMF network element and the terminal management function network element.

Optionally, the first access network device may further send the second information to the AF network element. The second information indicates the first access network device to complete a first operation on the target terminal. Specifically, after sending the query command/the query repeat command, the first access network device determines to complete the first operation on the target terminal if a third random number sent by the terminal is not received within preset duration.

It needs to be noted that S1701, S1702, S1703, S1705, S1707, S1708, and S1715 may be optional steps.

In addition, FIG. 16 or FIG. 17 is described with reference to the communication system shown in FIG. 2. With reference to the communication system shown in FIG. 3, the terminal management function network element in the method in FIG. 16 or FIG. 17 may be replaced with a NEF network element. That is, the NEF network element performs an action of the terminal management function network element in the method in FIG. 16 or FIG. 17. With reference to the communication system shown in FIG. 4, when the terminal management function network element performs signaling interaction with the AF network element in the method in FIG. 16 or FIG. 17, the signaling may be forwarded through the NEF network element.

In Embodiment 3 of this application, the AF network element manages the terminal. In Embodiment 3 of this application, the access network device sends the execution result to the AF network element. According to the method provided in Embodiment 3 of this application, a communication distance between the access network device and the terminal is not limited, so that the access network device may manage terminals in a scenario in which the terminals are deployed on a large scale.

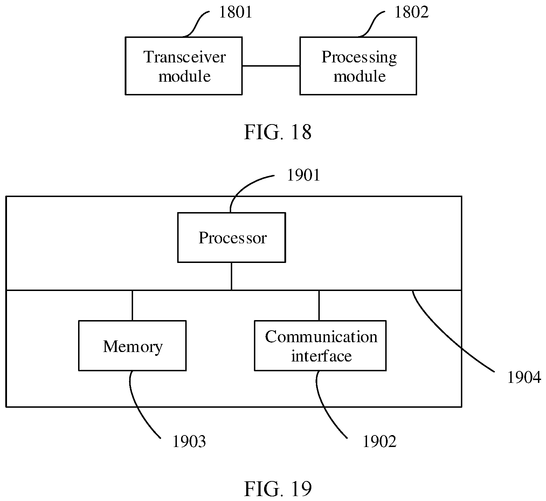

Based on a same technical concept, an embodiment of this application further provides a communication apparatus, configured to implement the method embodiments. FIG. 18 is a schematic diagram of a communication apparatus according to an embodiment of this application. The communication apparatus includes a transceiver module 1801 and a processing module 1802. The transceiver module 1801 is configured to process information receiving and sending. The processing module 1802 is configured to process data by the communication apparatus. It should be understood that the processing module 1802 in this embodiment of this application may be implemented by a processor or a processor-related circuit component (also referred to as a processing circuit), and the transceiver module 1801 may be implemented by a transceiver or a transceiver-related circuit component.

For example, the communication apparatus may be a communication apparatus device, or may be a chip used in a communication apparatus device, another combined device or component that has a function of the communication apparatus device, or the like.

When the communication apparatus device is an access network device, the transceiver module 1801 may be configured to receive first information. The processing module 1802 is configured to obtain identification information of a first terminal in a target terminal based on first information from a first network element. The transceiver module 1801 is further configured to: send the identification information of the first terminal to the first network element; and receive an indication of a first operation from the first network element. The processing module 1802 is further configured to perform the first operation on the first terminal according to the indication of the first operation. The transceiver module 1801 is further configured to send a first execution result to the first network element.

In addition, each module may be further configured to support another process performed by the access network device in the embodiments shown in FIG. 7 to FIG. 17. For beneficial effects, refer to the foregoing descriptions. Details are not described herein again.

When the communication apparatus device is a first network element such as the terminal management function network element in Embodiment 1, the AMF network element in Embodiment 2, or the AF network element in Embodiment 3, the processing module 1802 is configured to determine to perform the first operation on the target terminal. The transceiver module 1801 is configured to send first information to an access network device.

In addition, each module may be further configured to support another process performed by the terminal management function network element in Embodiment 1, the AMF network element in Embodiment 2, or the AF network element in Embodiment 3 in the embodiments shown in FIG. 7 to FIG. 17. For beneficial effects, refer to the foregoing descriptions. Details are not described herein again.

When the communication apparatus device is an AF network element, the transceiver module 1801 is configured to communicate with a first network element. The processing module 1802 is configured: to send fourth information to the first network element through the transceiver module 1801; and receive, through the transceiver module 1801, a result that is sent by the first network element and that is of a first operation performed by a target electronic tag.

In addition, each module may be further configured to support another process performed by the AF network element in the embodiments shown in FIG. 7 to FIG. 14. For beneficial effects, refer to the foregoing descriptions. Details are not described herein again.

Based on a same technical concept, an embodiment of this application further provides a communication device, configured to implement the method embodiments. FIG. 19 is a schematic diagram of another communication apparatus according to an embodiment of this application. The communication apparatus includes a processor 1901 and a communication interface 1902, and may further include a memory 1903 and a communication bus 1904. The processor 1901, the communication interface 1902, and the memory 1903 may be connected to each other through the bus 1904. The communication bus 1904 may be a peripheral component interconnect (peripheral component interconnect, PCI) bus, an extended industry standard architecture (extended industry standard architecture, EISA) bus, or the like. The communication bus 1904 may be classified into an address bus, a data bus, a control bus, and the like. For ease of representation, only one line is used to represent the bus in FIG. 19, but this does not mean that there is only one bus or only one type of bus. The processor 1901 may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (Generic Array Logic, GAL), or any combination thereof. The memory 1903 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache.

Specifically, the processor 1901 may be configured to implement a function of the processing module 1802, and the communication interface 1902 may be configured to implement a function of the transceiver module 1801. For details, refer to the foregoing descriptions. Details are not described herein again.

An embodiment of this application provides a computer-readable storage medium storing a computer program. The computer program includes instructions used to perform the foregoing method embodiments.

An embodiment of this application provides a computer program product including instructions. When the computer program product is run on a computer, the foregoing method embodiments are performed.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the spirit and scope of this application. In this way, this application is intended to cover these modifications and variations of this application provided that they fall within the scope of protection defined by the following claims and their equivalent technologies of this application.

## Claims

1. A communication method, wherein the method is applied to an access network device, and the method comprises:
obtaining identification information of a first terminal in a target terminal based on first information from a first network element, wherein the target terminal comprises one or more terminals;
sending the identification information of the first terminal to the first network element;
receiving an indication of a first operation from the first network element;
performing the first operation on the first terminal according to the indication of the first operation; and
sending a first execution result to the first network element, wherein the first execution result is a result of the first operation performed by the first terminal.

2. The method according to claim 1, wherein the first information indicates that an operation of a second terminal in the target terminal is completed, or the first information indicates to obtain identification information of another terminal in the target terminal, or the first information indicates to perform one random access procedure, or the first information indicates to obtain identification information of the target terminal.

3. The method according to claim 1 or 2, wherein after the sending a first execution result to the first network element, the method further comprises:
determining that an operation of obtaining the identification information of the target terminal is completed; and
sending second information to the first network element, wherein the second information indicates to complete an operation on the target terminal.

4. The method according to claim 3, wherein the first information carries a time interval; and
after the sending second information to the first network element, the method further comprises:
after the time interval elapses, obtaining the identification information of the target terminal again.

5. The method according to any one of claims 1 to 4, wherein the first information further comprises a first address, and the first address is an address used by the first network element to receive the identification information of the target terminal and/or an execution result of the first operation performed by the target terminal; and
the sending the identification information of the first terminal to the first network element comprises:
sending the identification information of the first terminal to the first network element based on the first address; and/or
the sending an execution result of the first operation to the first network element comprises:
sending the first execution result to the first network element based on the first address.

6. The method according to any one of claims 1 to 5, wherein the method further comprises:
obtaining an operation parameter corresponding to the first operation from the first network element.

7. The method according to any one of claims 1 to 6, wherein the first operation comprises at least one of the following: a read operation, a write operation, a delete operation, an encryption operation, an access operation, a block write operation, a block erase operation, or a kill operation.

8. The method according to any one of claims 1 to 7, wherein the indicating the first terminal to perform the first operation comprises:
sending the indication of the first operation to the first terminal; and
receiving the first execution result sent by the first terminal.

9. The method according to any one of claims 1 to 8, wherein the obtaining identification information of a first terminal in the target terminal comprises:
sending third information to the target terminal, wherein the third information is used for obtaining the identification information of the target terminal; and
receiving the identification information of the first terminal.

10. The method according to any one of claims 1 to 9, wherein the sending third information to the first terminal comprises:
if the first information does not carry a start time, sending the third information to the first terminal; or
if the first information carries a start time and a current time is not earlier than the start time and/or the first information carries an end time and the current time is not later than the end time, sending the third information to the first terminal.

11. The method according to any one of claims 1 to 10, wherein the first network element is a terminal management function network element, or the first network element is a mobility management network element, or the first network element is a network exposure network element, or the first network element is an application function network element, or the first network element is a terminal management function network element control plane network element.

12. A communication method, wherein the method is applied to a first network element, and the method comprises:
determining to perform a first operation on a target terminal, wherein the target terminal comprises one or more terminals; and sending first information to an access network device, wherein the first information is used for obtaining identification information of the target terminal; and
receiving identification information of a first terminal from the access network device.

13. The method according to claim 12, wherein the determining to perform a first operation on a target terminal comprises:
receiving fourth information from an application function network element, wherein the fourth information is used for requesting to perform the first operation on the target terminal.

14. The method according to claim 12 or 13, wherein after the receiving identification information of a first terminal from the access network device, the method further comprises:
sending the third information to the access network device, wherein the third information indicates to obtain identification information of another terminal in the target terminal, or the third information indicates that an operation of the first terminal is completed, or the third information indicates to perform one random access procedure; and
receiving identification information of a second terminal from the access network device.

15. The method according to claim 12 or 13, wherein after the receiving identification information of a first terminal from the access network device, the method further comprises:
sending an indication of the first operation to the access network device, wherein the indication of the first operation indicates to perform the first operation on the first terminal; and
receiving an execution result of the first operation from the access network device.

16. The method according to claim 15, wherein after the receiving the execution result of the first operation from the access network device, the method further comprises:
sending the third information to the access network device, wherein the third information indicates to obtain identification information of another terminal in the target terminal, or the third information indicates that an operation of the first terminal is completed, or the third information indicates to perform one random access procedure; and
receiving identification information of a second terminal from the access network device.

17. The method according to any one of claims 14 to 16, wherein the sending first information to the access network device comprises:
if the fourth information does not carry a start time, sending the first information to the access network device; or
if the fourth information carries a start time and a current time is not earlier than the start time and/or the fourth information carries an end time and the current time is not later than the end time, sending the first information to the access network device.

18. The method according to any one of claims 14 to 17, wherein the first operation comprises at least one of the following: a read operation, a write operation, a delete operation, an encryption operation, an access operation, a block write operation, a block erase operation, or a kill operation.

19. The method according to any one of claims 12 to 18, wherein the first network element is a terminal management function network element, or the first network element is a mobility management network element, or the first network element is a network exposure network element, or the first network element is a terminal management function network element control plane network element.

20. The method according to any one of claims 12 to 19, wherein the method further comprises:
receiving second information from one or more access network devices, wherein the second information indicates to complete an operation on the target terminal; and
sending the fifth information to the application function network element, wherein the fifth information indicates to complete the operation on the target terminal.

21. A communication method, wherein the method is applied to an application function network element, and the method comprises:
sending fourth information to a first network element, wherein the fourth information is used for requesting to perform a first operation on a target electronic tag, and the target electronic tag comprises one or more electronic tags; and
receiving a result that is sent by the first network element and that is of the first operation performed by the target electronic tag.

22. The method according to claim 21, wherein the first operation comprises at least one of the following: a read operation, a write operation, a delete operation, an encryption operation, an access operation, a block write operation, a block erase operation, or a kill operation.

23. A communication apparatus, wherein the apparatus is used in an access network device, and the apparatus comprises:
a processing module, configured to obtain identification information of a first terminal in a target terminal based on first information from a first network element, wherein the target terminal comprises one or more terminals; and
a transceiver module, configured to: send the identification information of the first terminal to the first network element; and
receive an indication of a first operation from the first network element, wherein
the processing module is further configured to perform the first operation on the first terminal according to the indication of the first operation; and
the transceiver module is further configured to send a first execution result to the first network element, wherein the first execution result is a result of the first operation performed by the first terminal.

24. The apparatus according to claim 23, wherein the first information indicates that an operation of a second terminal in the target terminal is completed, or the first information indicates to obtain identification information of another terminal in the target terminal, or the first information indicates to perform one random access procedure, or the first information indicates to obtain identification information of the target terminal.

25. The apparatus according to claim 23 or 24, wherein the processing module is further configured to:
after the transceiver module sends the first execution result to the first network element, determine that an operation of obtaining the identification information of the target terminal is completed; and
the transceiver module is further configured to send second information to the first network element, wherein the second information indicates to complete an operation on the target terminal.

26. The apparatus according to claim 25, wherein the first information carries a time interval; and
the processing module is further configured to:
after the transceiver module sends the second information to the first network element, obtain the identification information of the target terminal again after the time interval elapses.

27. The apparatus according to any one of claims 23 to 26, wherein the first information further comprises a first address, and the first address is an address used by the first network element to receive the identification information of the target terminal and/or an execution result of the first operation performed by the target terminal;
when sending the identification information of the first terminal to the first network element, the transceiver module is specifically configured to:
send the identification information of the first terminal to the first network element based on the first address; and/or
when sending the execution result of the first operation to the first network element, the transceiver module is specifically configured to:
send the first execution result to the first network element based on the first address.

28. The apparatus according to any one of claims 23 to 27, wherein the processing module is further configured to:
obtain an operation parameter corresponding to the first operation from the first network element.

29. The apparatus according to any one of claims 23 to 28, wherein the first operation comprises at least one of the following: a read operation, a write operation, a delete operation, an encryption operation, an access operation, a block write operation, a block erase operation, or a kill operation.

30. The apparatus according to any one of claims 23 to 29, wherein when indicating the first terminal to perform the first operation, the processing module is specifically configured to:
send the indication of the first operation to the first terminal through the transceiver module; and
receive, through the transceiver module, the first execution result sent by the first terminal.

31. The apparatus according to any one of claims 23 to 30, wherein when obtaining the identification information of the first terminal in the target terminal, the processing module is specifically configured to:
send third information to the target terminal through the transceiver module, wherein the third information is used for obtaining the identification information of the target terminal; and
receive the identification information of the first terminal through the transceiver module.

32. The apparatus according to any one of claims 23 to 31, wherein when sending the third information to the first terminal, the transceiver module is specifically configured to:
if the first information does not carry a start time, send the third information to the first terminal; or
if the first information carries a start time and a current time is not earlier than the start time and/or the first information carries an end time and the current time is not later than the end time, send the third information to the first terminal.

33. The apparatus according to any one of claims 23 to 32, wherein the first network element is a terminal management function network element, or the first network element is a mobility management network element, or the first network element is a network exposure network element, or the first network element is an application function network element, or the first network element is a terminal management function network element control plane network element.

34. A communication apparatus, wherein the apparatus is used in a first network element, and the apparatus comprises:
a processing module, configured to determine to perform a first operation on a target terminal, wherein the target terminal comprises one or more terminals; and
a transceiver module, configured to: send first information to an access network device, wherein the first information is used for obtaining identification information of the target terminal; and
receive identification information of a first terminal from the access network device.

35. The apparatus according to claim 34, wherein the processing module is specifically configured to:
receive fourth information from an application function network element through the transceiver module, wherein the fourth information is used for requesting to perform the first operation on the target terminal.

36. The apparatus according to claim 34 or 35, wherein the transceiver module is further configured to:
after receiving the identification information of the first terminal from the access network device, send the third information to the access network device, wherein the third information indicates to obtain identification information of another terminal in the target terminal, the third information indicates that an operation of the first terminal is completed, or the third information indicates to perform one random access procedure; and
receive identification information of a second terminal from the access network device.

37. The apparatus according to claim 34 or 35, wherein the transceiver module is further configured to:
after receiving the identification information of the first terminal from the access network device, send an indication of the first operation to the access network device, wherein the indication of the first operation indicates to perform the first operation on the first terminal; and
receive an execution result of the first operation from the access network device.

38. The apparatus according to claim 37, wherein the transceiver module is further configured to:
after receiving the execution result of the first operation from the access network device, send the third information to the access network device, wherein the third information indicates to obtain identification information of another terminal in the target terminal, or the third information indicates that an operation of the first terminal is completed, or the third information indicates to perform one random access procedure; and
receive identification information of a second terminal from the access network device.

39. The apparatus according to any one of claims 36 to 38, wherein when sending the first information to the access network device, the transceiver module is specifically configured to:
if the fourth information does not carry a start time, send the first information to the access network device; or
if the fourth information carries a start time and a current time is not earlier than the start time and/or the fourth information carries an end time and the current time is not later than the end time, send the first information to the access network device.

40. The apparatus according to any one of claims 36 to 39, wherein the first operation comprises at least one of the following: a read operation, a write operation, a delete operation, an encryption operation, an access operation, a block write operation, a block erase operation, or a kill operation.

41. The apparatus according to any one of claims 34 to 40, wherein the first network element is a terminal management function network element, or the first network element is a mobility management network element, or the first network element is a network exposure network element, or the first network element is a terminal management function network element control plane network element.

42. The apparatus according to any one of claims 34 to 41, wherein the transceiver module is further configured to:
receive second information from one or more access network devices, wherein the second information indicates to complete an operation on the target terminal; and
send the fifth information to the application function network element, wherein the fifth information indicates to complete the operation on the target terminal.

43. A communication apparatus, wherein the method is applied to an application function network element, and the method comprises:
a transceiver module, configured to: send fourth information to a first network element, wherein the fourth information is used for requesting to perform a first operation on a target electronic tag, and the target electronic tag comprises one or more electronic tags; and
receive a result that is sent by the first network element and that is of the first operation performed by the target electronic tag.

44. The apparatus according to claim 43, wherein the first operation comprises at least one of the following: a read operation, a write operation, a delete operation, an encryption operation, an access operation, a block write operation, a block erase operation, or a kill operation.

45. A communication device, comprising a processor, and a memory and a communication interface that are separately coupled to the processor, wherein the communication interface is configured to communicate with another device; and the processor is configured to: run instructions or a program in the memory, and perform the method according to any one of claims 1 to 11 through the communication interface, or perform the method according to any one of claims 12 to 20 through the communication interface, or perform the method according to claim 21 or 22 through the communication interface.

46. A computer-readable storage medium, wherein the computer-readable storage medium stores instructions, and when the instructions are run on a computer, the computer is enabled to perform the method according to any one of claims 1 to 22.

47. A communication system, comprising the apparatus according to any one of claims 23 to 33 and the apparatus according to any one of claims 34 to 42.

48. The communication system according to claim 47, wherein the communication system further comprises the apparatus according to claim 43 or 44.
